# EUROPEAN PATENT SPECIFICATION

(11) **EP 2 017 458 B1**
(45) Date of publication and mention of the grant of the patent: **10.10.2012**
(21) Application number: 08252461.2
(22) Date of filing: 18.07.2008
(51) Int. Cl.: F02M 35/04

(54) **Vehicle**
Fahrzeug
Véhicule

(30) Priority: 20.07.2007 JP 2007189654; 06.09.2007 JP 2007231972
(43) Date of publication of application: 21.01.2009
(73) Proprietor: Yamaha Hatsudoki Kabushiki Kaisha, Shizuoka-ken Shizuoka 438-8501 (JP)
(72) Inventor: Sudoh, Takehiko, Shizuoka-ken 438-8501 (JP)
(74) Representative: Moreland, David

(56) References cited:
- EP-A2- 1 256 701
- EP-A2- 1 808 585
- DE-A1- 19 717 272
- JP-A- 59 101 535

## Description

### FIELD OF THE INVENTION

The present invention relates to a vehicle, and more particularly to a vehicle including a funnel that introduces air to an intake port of an engine.

### BACKGROUND TO THE INVENTION

Motorcycles and other vehicles are known that include a funnel that introduces air to an intake port of an engine. For example, JP-A-9-100720 describes a motorcycle including a funnel that is divided into two.

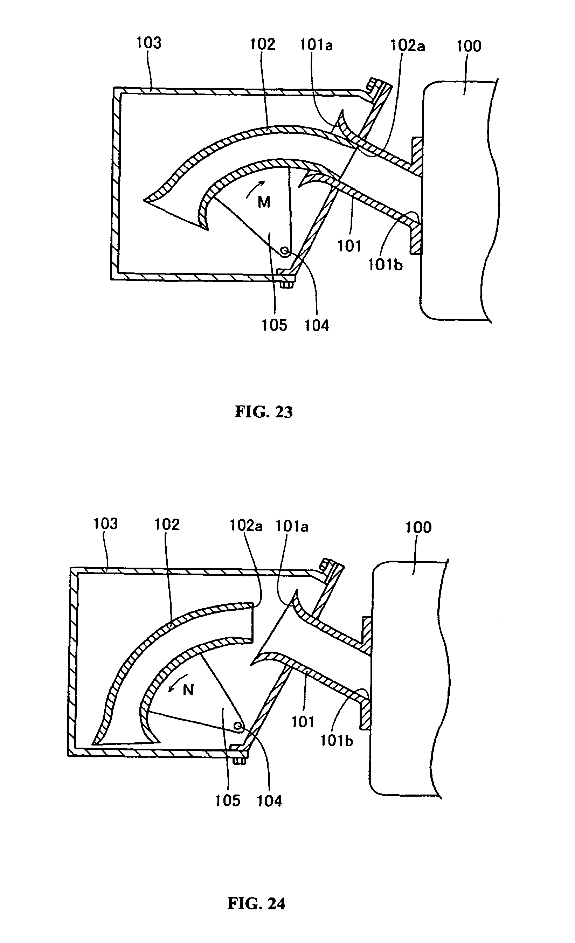

FIG. 23 and FIG. 24 are cross sectional views that illustrate the structure of the known motorcycle funnel described in JP-A-9-100720. First, as can be seen from FIG. 23, the known motorcycle funnel includes a fixed funnel 101 and a moveable funnel 102. The fixed funnel 101 is fixed to a cleaner box 103 that is supplied with air that is cleaned by an air filter (not shown in the figures). In addition, an opening 101a at the intake side of the fixed funnel 101 is disposed inside the cleaner box 103, and an opening 101b on the opposite side to the intake side is connected to an intake port (not shown in the figures) including an intake valve of the engine 100.

In addition, the moveable funnel 102 is disposed inside the cleaner box 103 so as to be capable of moving within the cleaner box 103. More particularly, the moveable funnel 102 is supported inside the cleaner box 103 by a single turning lever 105 that turns centering on a support shaft 104. As a result, as shown in FIG. 23, when the turning lever 105 turns in direction M, the opening 102a on the fixed funnel 101 side of the moveable funnel 102 moves in the direction toward the opening 101a of the fixed funnel 101. On the other hand, when the turning lever 105 turns in direction N as shown in FIG. 24, the opening 102a at the fixed funnel 101 side of the moveable funnel 102 moves in the direction away from the opening 101a of the fixed funnel 101.

However, a problem occurs in the structure of JP-A-9-100720 shown in FIG. 23 and FIG. 24 when the moveable funnel 102 is separated from the fixed funnel 101 (when an engine 100 is rotating at high speed), namely, air flow resistance increases. More particularly, in JP-A-9-100720, as shown in FIG. 24, the moveable funnel 102 is moved by the single turning lever 105, and thus when the moveable funnel 102 is separated away from the fixed funnel 101, an opening surface of the opening 102a of the moveable funnel 102 inclines with respect to an opening surface of the opening 101a of the fixed funnel 101. As a result, air that is taken in by the fixed funnel 101 having passed through the moveable funnel 102 has a curved flow direction. This increases air flow resistance. Thus, this causes the problem that, when the moveable funnel 102 is separated from the fixed funnel 101, air intake efficiency is reduced.

DE19717272 describes an adjustable air inlet system for an internal combustion engine. Curved inlet branches of the inlet are connected via an adjustable mechanism to a collection manifold. The adjustable mechanism includes levers with powered adjusting devices that use vacuum actuators. The levers are mounted at a plenum housing and the extension pieces in the form of a four bar linkage, wherein the same lever length is used such that the levers define a parallelogram.

EP1808585 describes an intake port for an engine that comprises a curved movable funnel 28, which is selectively movable/removable from a fixed funnel under the actions of a parallel link comprising two parallel arms.

The invention has been devised in light of the above-described problems, and it is an object of embodiments of the present invention to provide a vehicle that can inhibit reduction in air intake efficiency when a moveable funnel is separated away from a fixed funnel.

### SUMMARY OF THE INVENTION

A vehicle according to an aspect of the invention includes: an engine including an intake port; a fixed funnel that introduces air to the intake port of the engine; a moveable funnel that is disposed such that it is capable of moving toward an intake opening of the fixed funnel, and that along with the fixed funnel introduces air to the intake port of the engine; and a first arm and a second arm that support the moveable funnel such that it can be moved in line with an air introduction direction of the fixed funnel, and that have radiuses of turn that are different from each other.

The vehicle according to the aspect, as described above, is provided with the first arm and the second arm that support the moveable funnel such that it can be moved in line with the air introduction direction of the fixed funnel, and that have the radiuses of turn that are different from each other. By appropriately adjusting the radiuses of turn of the first arm and the second arm that have radiuses of turn that are different from each other, an opening on the fixed funnel side of the moveable funnel can be as aligned with an opening on the intake side of the fixed funnel when the opening on the fixed funnel side of the moveable funnel is separated from the intake opening of the fixed funnel. As a result, the flow of air that is taken in through the fixed funnel having passed through the moveable funnel is linear, and thus it is possible to inhibit air flow resistance from increasing. Accordingly, when the moveable funnel is separated away from the fixed funnel, it is possible to inhibit reduction in air intake efficiency. Furthermore, as a result of the radiuses of turn (the arm lengths) of the first arm and the second arm being different from each other, even though it would not be possible to accommodate the first arm and the second arm if they had the same length due to space considerations, it is possible to easily accommodate the first arm and the second arm. As a result, reduction in the degree of freedom of the arrangement of the first arm and the second arm for moving the moveable funnel is inhibited. In addition, when the opening at the fixed funnel side of the moveable funnel is separated away from the intake opening of the fixed funnel, the opening at the fixed funnel side of the moveable funnel is located at the same position as the intake opening of the fixed funnel when viewed from the direction in which air is introduced.

Aspects of the present invention are set forth in the independent claims. Optional features of the invention are set forth in the dependent claims.

### BRIEF DESCRIPTION OF THE DRAWINGS

These and other aspects of the present invention will now be described, by way of example only, with reference to the accompanying drawings, in which:
FIG. 1 is a side view that shows the overall structure of a motorcycle of an embodiment of the invention;
FIG. 2 is a plan view of the vicinity of funnels of the motorcycle of the embodiment shown in FIG. 1;
FIG. 3 is a cross sectional view of the vicinity of the funnels of the motorcycle of the embodiment shown in FIG. 1;
FIG. 4 is a cross sectional view that illustrates the attachment structure for a cleaner box of an air filter of the motorcycle of the embodiment shown in FIG. 1;
FIG. 5 is a perspective view that shows the state where a moveable funnel of the motorcycle of the embodiment shown in FIG. 1 has been moved to a separated position;
FIG. 6 is a side view that shows the vicinity of an intermediate link lever when the moveable funnel of the motorcycle of the embodiment shown in FIG. 1 has been moved to the separated position;
FIG. 7 is a side view showing the vicinity of an upper side link lever and a lower side link lever when the moveable funnel of the motorcycle of the embodiment shown in FIG. 1 has been moved to the separated position;
FIG. 8 is a perspective view showing the state where the moveable funnel of the motorcycle of the embodiment shown in FIG. 1 has been moved to an abutting position;
FIG. 9 is a side view showing the vicinity of the intermediate link lever when the moveable funnel of the motorcycle of the embodiment shown in FIG. 1 has been moved to the abutting position;
FIG. 10 is a side view of the vicinity of the upper side link lever and the lower side link lever when the moveable funnel of the motorcycle of the embodiment shown in FIG. 1 has been moved to the abutting position;
FIG. 11 is a plan view that illustrates the detailed structure of the vicinity of the funnels of the motorcycle of the embodiment shown in FIG. 1;
FIG 12 is a cross sectional view that illustrates the attachment structure for a throttle body of the fixed funnel of the motorcycle of the embodiment shown in FIG. 1;
FIG. 13 is a cross sectional view that illustrates the attachment structure for the throttle body of the fixed funnel of the motorcycle of the embodiment shown in FIG. 1;
FIG. 14 is a front view of the moveable funnel of the motorcycle of the embodiment shown in FIG. 1;
FIG. 15 is a cross sectional view that illustrates the detailed structure of a seal member of the motorcycle of the embodiment shown in FIG. 1;
FIG. 16 is a cross sectional view that illustrates the detailed structure of the seal member of the motorcycle of the embodiment shown in FIG. 1;
FIG. 17 is a perspective view that illustrates the structure of the upper side link lever and a turning shaft of the motorcycle of the embodiment shown in FIG. 1;
FIG. 18 is a side view that illustrates the structure of the vicinity of the upper side link lever of the motorcycle of the embodiment shown in FIG. 1;
FIG. 19 is a perspective view that illustrates the structure of the lower side link lever and a turning shaft of the motorcycle of the embodiment shown in FIG. 1;
FIG. 20 is a side view that illustrates the structure of the vicinity of the lower side link lever of the motorcycle of the embodiment shown in FIG. 1;
FIG. 21 is a cross sectional view that illustrates the structure of a moving member of the motorcycle of the embodiment shown in FIG. 1;
FIG. 22 is a cross sectional view that illustrates the structure of the moving member of the motorcycle of the embodiment shown in FIG. 1;
FIG. 23 is a cross sectional view that illustrates the structure of a funnel of a known motorcycle; and
FIG. 24 is a cross sectional view that illustrates the structure of the funnel of the known motorcycle.

### DETAILED DESCRIPTION OF THE DRAWINGS

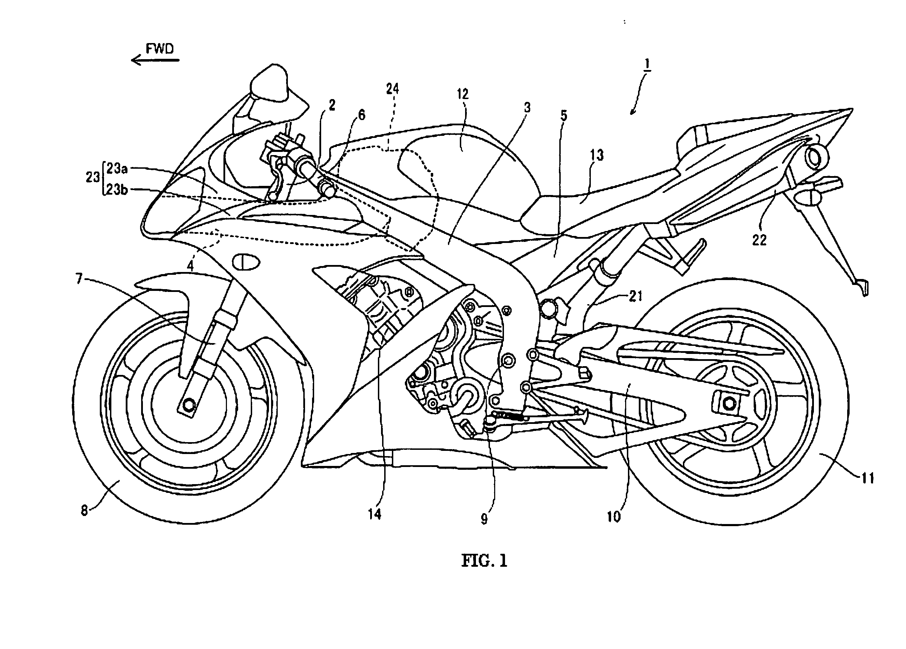

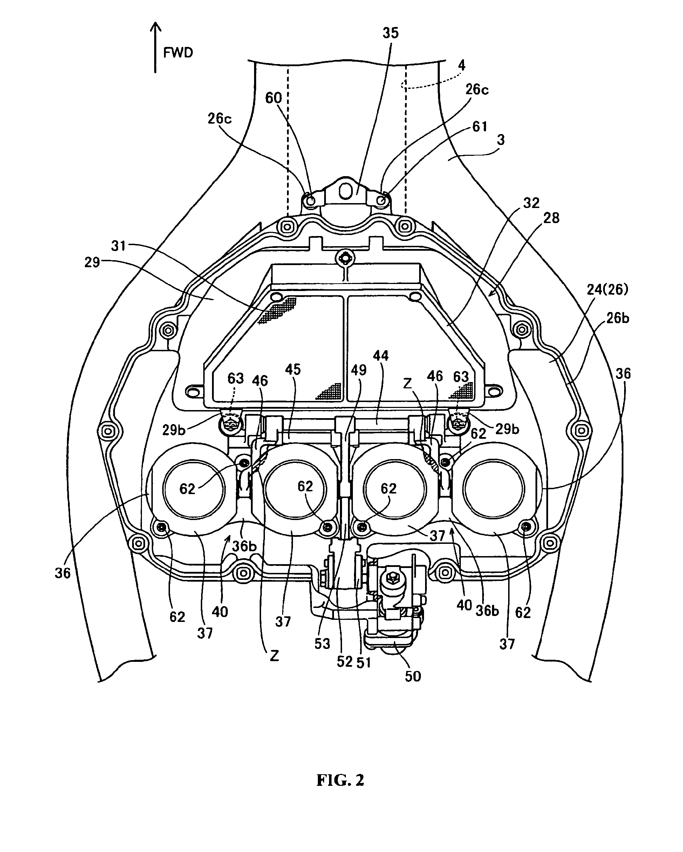

FIG. 1 is a side view showing the overall structure of a motorcycle according to an embodiment of the invention. FIG. 2 to FIG. 22 are figures that illustrate in detail the structure of a funnel of the motorcycle according to the embodiment shown in FIG. 1. Note that, in this embodiment, a motorcycle is explained as one example of a vehicle of the invention. In the figures, FWD indicates the forward direction in the running direction of the motorcycle. First, the structure of a motorcycle 1 according to the embodiment will be explained with reference to FIG. 1 to FIG. 22.

In the structure of the motorcycle 1 according to the embodiment, a front end section of a main frame 3 is connected to a head pipe 2 as shown in FIG. 1. The main frame 3, as can be seen from FIG. 2, is disposed so as to split to the left and right and extend in the forward direction of a vehicle body (the direction of arrow FWD). In addition, an air induction passage 4 is provided on the main frame 3 in order to introduce air to a cleaner box 24, described hereinafter. Furthermore, the main frame 3 is formed to extend downward to the rear side as shown in FIG. 1. Further, a seat rail 5 that extends upward to the rear side is connected to the main frame 3. In addition, a handle 6 is rotatably attached to or mounted within the head pipe 2. Moreover, a front fork 7 is attached to a lower side of the handle 6. A front wheel 8 is rotatably attached to a lower end section of the front fork 7.

Moreover, a front end section of a swing arm 10 is attached to a rear end section of the main frame 3 via a pivot shaft 9. A rear wheel 11 is rotatably attached to a rear end section of the swing arm 10. In addition, a fuel tank 12 is disposed above the main frame 3, and a seat 13 is disposed above the seat rail 5. Furthermore, an engine 14 is mounted beneath the main frame 3.

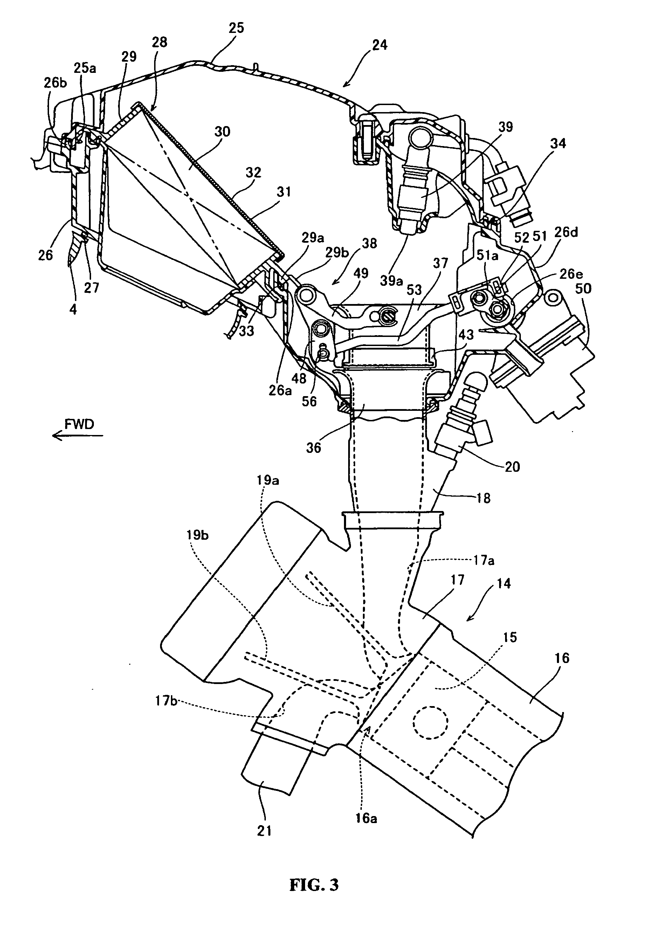

The engine 14, as shown in FIG. 3, includes a piston 15, a cylinder 16, a cylinder head 17, and a throttle body 18. The piston 15 is slidably fitted inside the cylinder 16, and the cylinder head 17 is positioned so as to cover an opening at one end of the cylinder 16. In addition, an intake port 17a and an exhaust port 17b are formed in the cylinder head 17. The intake port 17a is provided to supply an air-fuel mixture that includes air and fuel to a combustion chamber 16a of the cylinder 16. Moreover, the exhaust port 17b is provided to exhaust residual gas that remains after combustion from the combustion chamber 16a of the cylinder 16. Further, an intake valve 19a and an exhaust valve 19b are respectively provided in the intake port 17a and the exhaust port 17b. The throttle body 18 is attached to an opening of the intake port 17a. In addition, an injector 20 is attached to the throttle body 18 and injects fuel into the intake port 17a. Moreover, an exhaust pipe 21 is attached to an opening of the exhaust port 17b, and a muffler 22 (refer to FIG. 1) is connected to the exhaust pipe 21. Note that, FIG. 3 only shows one cylinder 16 but in reality four cylinders 16 are arranged at determined distances apart from each other in the vehicle body width direction. In other words, the engine 14 of the motorcycle 1 according to the embodiment is a 4 cylinder in-line engine.

In addition, as shown in FIG. 1, a front cowl 23 including an upper cowl 23a and a lower cowl 23b is provided so as to cover a front side of the vehicle body. Moreover, as shown in FIG. 1 and FIG. 2, the cleaner box 24 is disposed between the left right branching main frame 3, and is supplied with air from the air induction passage 4. Note that, the cleaner box 24 is one example of an "air chamber" of the invention. The cleaner box 24, as shown in FIG. 3, is disposed at the intake side of the throttle body 18 of the engine 14, and includes an upper side box section 25 and a lower side box section 26. Moreover, an air filter 28 is provided inside the cleaner box 24, and cleans air supplied from the air induction passage 4 via a sponge member 27.

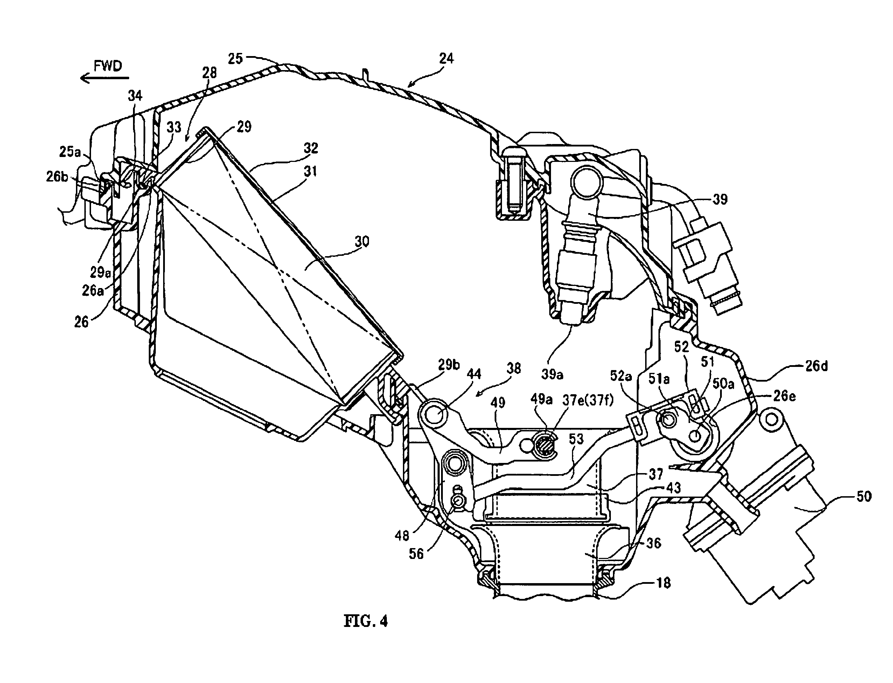

In addition, as shown in FIG. 2 and FIG. 3, the air filter 28 includes a resin made body 29, a filter element 30 (refer to FIG. 3), an extinguishing net 31 and a cover section 32. A protrusion 29a is formed integrally around the whole circumference of an edge section of the body 29 of the air filter 28, as shown in FIG. 4. In addition, a recess 26a is formed integrally with the lower side box section 26 and corresponds with the protrusion 29a of the air filter 28. In addition, a rubber made seal member 33 is disposed between the recess 26a of the lower side box section 26 and the protrusion 29a of the body 29. Moreover, the air filter 28 is sandwiched between the upper side box section 25 and the lower side box section 26 of the cleaner box 24 and is thereby fixed therebetween. In addition, a detachment inhibiting member 29b is formed integrally with the body 29 of the air filter 28 as shown in FIG. 2 and FIG. 3, and inhibits a screw 63 (refer to FIG. 2), described hereinafter, from detaching to the upper side.

Moreover, referring to FIG. 2 and FIG. 4, a protrusion 26b is formed integrally around the entire circumference of the edge section of the lower side box section 26. In addition, a recess 25a into which the protrusion 26b of the lower side box section 26 is inserted is formed integrally with the upper side box section 25 as shown in FIG. 4. Furthermore, a rubber made seal member 34 is disposed between the recess 25a of the upper side box section 25 and the protrusion 26b of the lower side box section 26. In addition, two fixing members 26c at the front of the lower side box section 26 are fixed to the main frame 3 by connecting members 60 and 61 via a fixing bracket 35 as shown in FIG. 2.

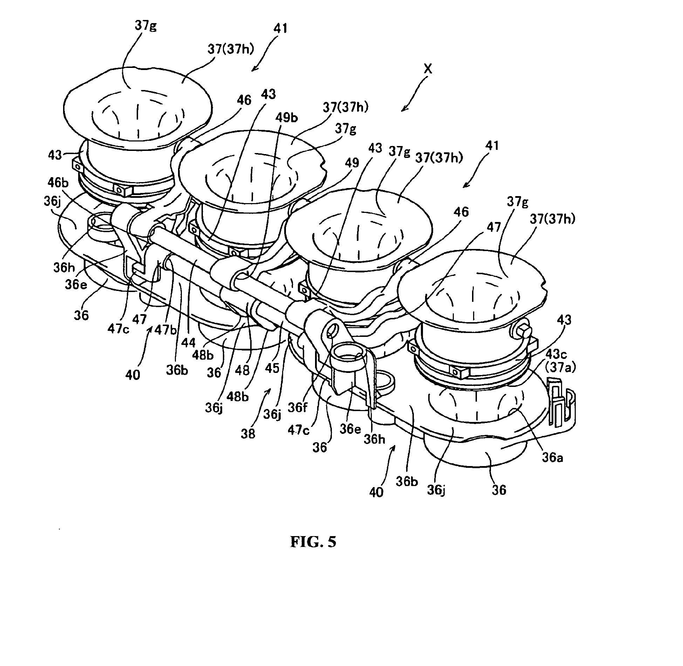

Note that, in this embodiment, as shown in FIG. 3 and FIG. 5, a fixed funnel 36, a moveable funnel 37 and a funnel moving mechanism 38 are provided inside the cleaner box 24 (refer to FIG. 3) at positions to the upstream side of the engine 14 (refer to FIG. 3) and to the downstream side (the clean side) of the air filter 28 (refer to FIG. 3). The fixed funnel 36 and the moveable funnel 37 are provided for each one of the cylinders 16 of the engine 14 as shown in FIG. 2 and FIG. 3. Moreover, the fixed funnel 36 is fixed with respect to the lower side box section 26 of the cleaner box 24, and functions to introduce cleaned air within the cleaner box 24 to the intake port 17a. Furthermore, the moveable funnel 37 is positioned at the intake side (the upstream side) of the fixed funnel 36, and functions, along with the fixed funnel 36, to introduce cleaned air within the cleaner box 24 to the intake port 17a.

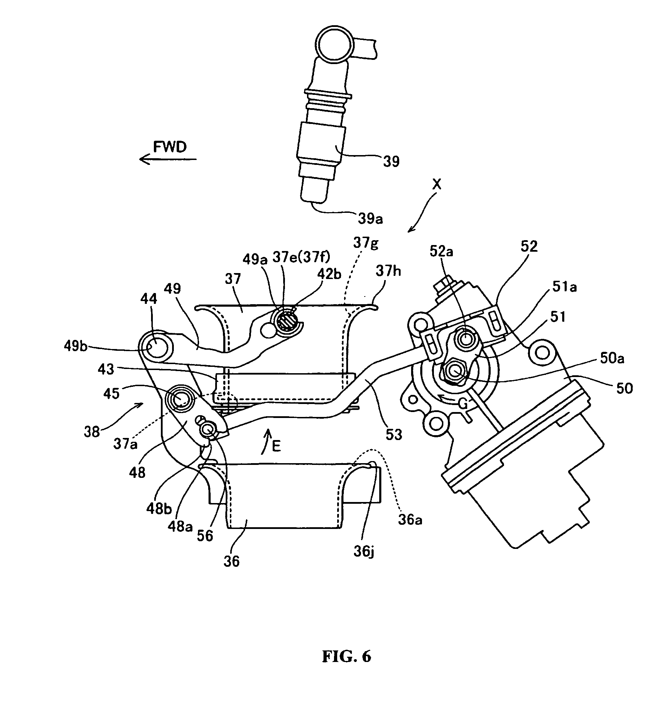

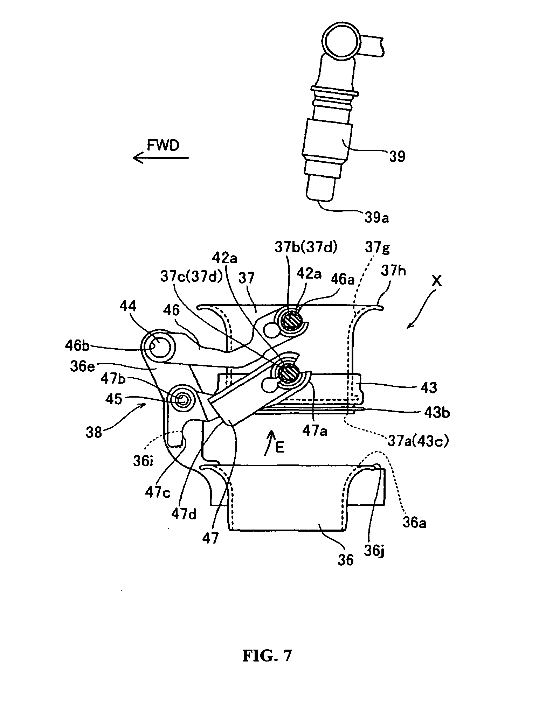

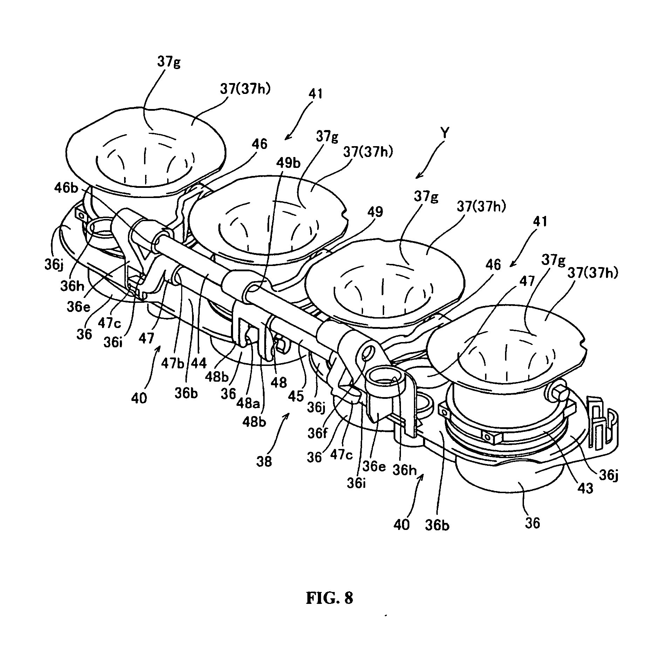

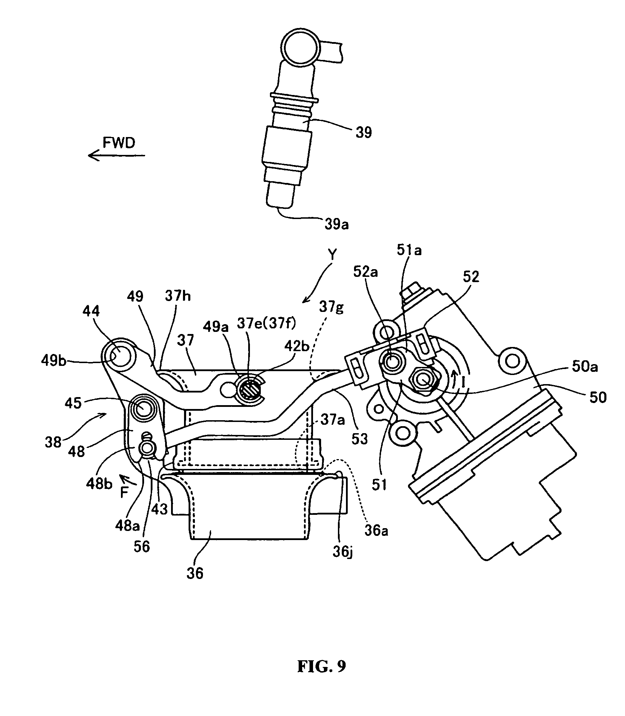

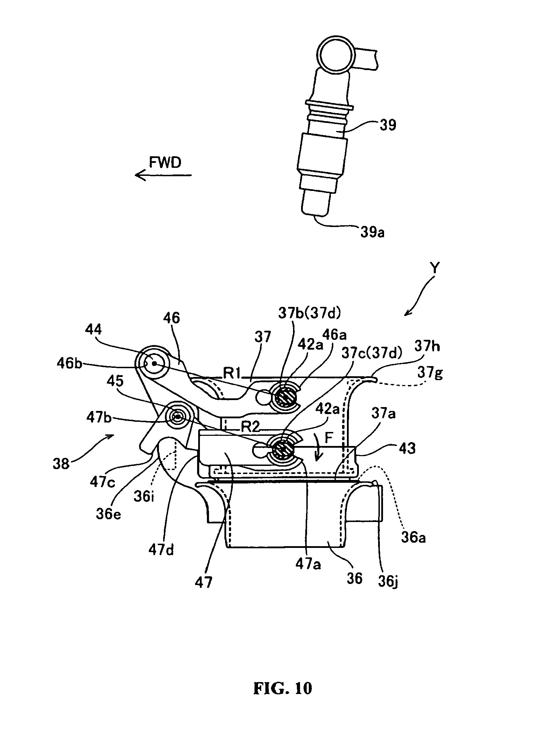

In addition, as can be seen from FIG. 5 to FIG. 10, the moveable funnel 37 can be moved between a separated position X (the state shown in FIG. 5 to FIG. 7) and an abutting position Y (the state shown in FIG. 8 to FIG. 10). The separated position X is a position at which an opening 37a on the fixed funnel 36 side is separated away from an opening 36a on the intake side of the fixed funnel 36 (refer to FIG. 6 and FIG. 7). The abutting position Y is a position at which the opening 37a of the moveable funnel 37 (refer to FIG. 9 and FIG. 10) abuts against the opening 36a of the fixed funnel 36 (refer to FIG. 9 and FIG. 10). Note that, the separated position X is one example of a "second position" of the invention, and the abutting position is one example of a "first position" of the invention. In addition, the opening 36a on the intake side is one example of an "intake port" of the invention. Moreover, the opening 37a of the moveable funnel 37 on the fixed funnel 36 side of the embodiment is provided with a second seal 43c of a seal member 43, described hereinafter.

Note that, referring to FIG. 5, when the moveable funnel 37 has been moved to the separated position X (the state shown in FIG. 6 and FIG. 7), the intake pipe that connects from the cleaner box 24 (refer to FIG. 3) to the cylinder 16 (refer to FIG. 3) is formed by the fixed funnel 36, the throttle body 18 (refer to FIG. 3) and the intake port 17a (refer to FIG. 3). On the other hand, referring to FIG. 8, when the moveable funnel 37 is moved to the abutting position Y (the state shown in FIG. 9 and FIG. 10), the intake pipe that connects from the cleaner box 24 (refer to FIG. 3) to the cylinder 16 (refer to FIG. 3) is formed by the moveable funnel 37, the fixed funnel 36, the throttle body 18 (refer to FIG. 3), and the intake port 17a (refer to FIG. 3). In addition, the funnel moving mechanism 38 (an upper side link lever 46 and a lower side link lever 47, described hereinafter) functions to provide moveable support such that the moveable funnel 37 can be moved between the separated position X and the abutting position Y in line with an air introduction direction of the fixed funnel 36.

Furthermore, an injector 39 is attached to an upper section of the upper side box section 25 of the cleaner box 24 as shown in FIG. 4. The injector 39 is provide in order to inject fuel from a fuel injection member 39a to the intake port 17a (refer to FIG. 3) along with the injector 20 (refer to FIG. 3) when the engine 14 (refer to FIG. 3) is rotating at high speed. In addition, the injector 39 is positioned to the upper side of the moveable funnel 37 so as to be directed toward the opening 36a of the intake side of the fixed funnel 36.

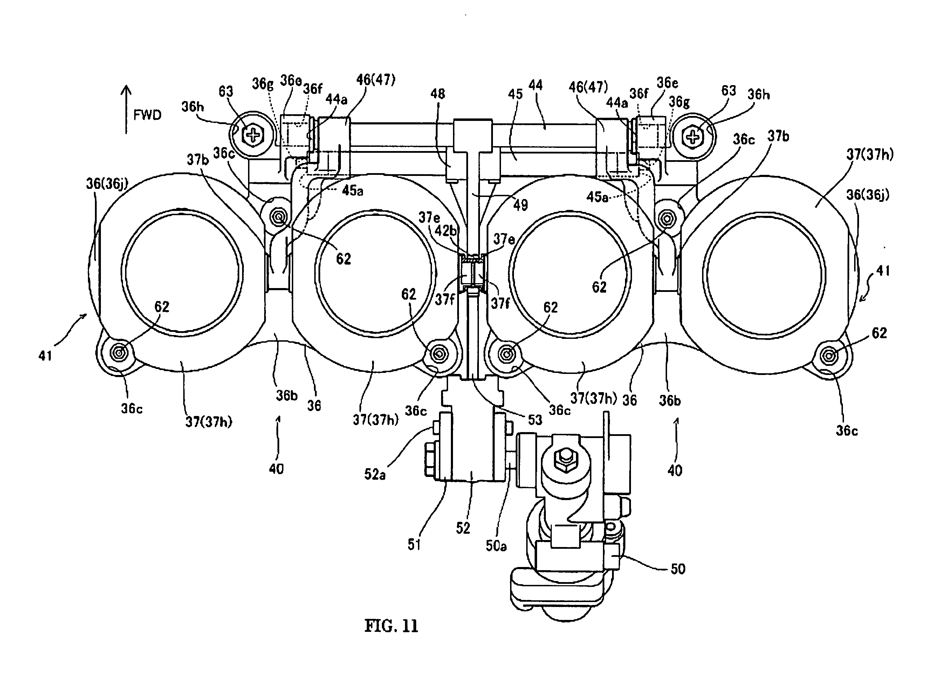

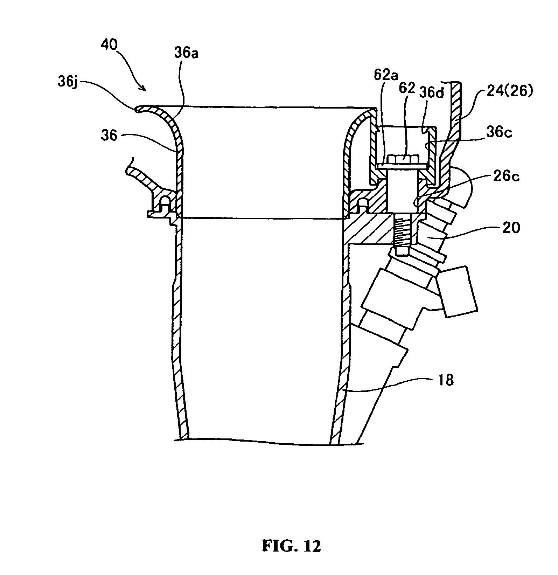

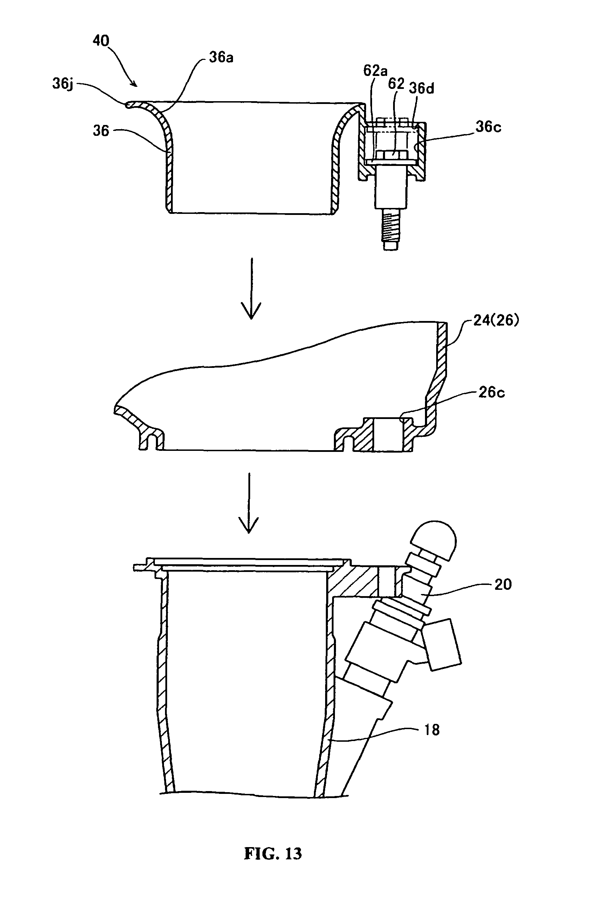

In addition, the fixed funnel 36, as shown in FIG. 2 and FIG. 5, has a structure including a pair of neighboring fixed funnels 36 that are integrated using a connection member 36b. More specifically, in this embodiment, a pair of members 40, which integrate the neighboring pairs of fixed funnels 36, is provided. In addition, as shown in FIG. 11, three screw insertion holes 36c into which screws 62 are inserted (refer to FIG. 12) are provided in each member 40 that integrates the pair of fixed funnels 36. Furthermore, referring to FIG. 12, the fixed funnel 36 (the member 40) is attached to the cleaner box 24 (the lower side box section 26) and the throttle body 18 by the screws 62 that are screwed into the screw insertion holes 36c. Note that, the screws 62 are one example of a "fixing member" of the invention. In addition, the screw insertion holes 36c into which the screws 62 are inserted are also provided in the lower side box section 26 of the cleaner box 24. Furthermore, an engagement member 36d is provided in an inner surface of each of the screw insertion holes 36c of the fixed funnel 36 (the member 40). As a result, as shown in FIG. 13, a head 62a of each screw 62 can be engaged with the engagement member 36d before each screw 62 is attached to the throttle body 18, and thus each screw 62 can be inhibited from detaching away from the screw insertion hole 36c to the upper side.

Moreover, as shown in FIG. 5, a support strut 36e is provided integrally in each member 40 that integrates the pairs of fixed funnels 36. A turning shaft support hole 36f is provided in each support strut 36e as shown in FIG. 11, and turnably or rotatably supports an end of the a turning shaft 44, described hereinafter. Furthermore, a turning shaft support hole 36g (see Fig. 11) is provided beneath the turning shaft support hole 36f of the support strut 36e and turnably or rotatably supports an end of a turning shaft 45, described hereinafter.

Moreover, as shown in FIG. 5, fixing holes 36h are respectively provided in each of the support struts 36e of the two members 40. In addition, the fixing holes 36h of the support struts 36e of the two members 40 are screw-fixed by the screws 63 to the lower side box section 26 (refer to FIG. 2) as shown in FIG. 11. Moreover, as shown in FIG. 5, a regulation member 36i (refer to FIG. 7 and FIG. 10) is provided in a front section of each of the two support struts 36e. The regulation member 36i abuts against a stopper 47c, described hereinafter, when the opening 37a on the fixed funnel 36 side of the moveable funnel 37 is positioned at the separated position X (the state of FIG. 5) away from the opening 36a on the intake side of the fixed funnel 36. Each regulation member 36i, as shown in FIG. 7 and FIG. 10, has a recessed shape that extends toward a rear side of the support strut 36e from the front section thereof. Note that, the regulation members 36i are one example of a "receiving member" of the invention.

Further, as shown in FIG. 2 and FIG. 5, an intake portion 36j is formed in the opening 36a on the intake side of each fixed funnel 36. The intake portion 36j is formed to enlarge toward the outside in the redial direction of the fixed funnel 36 when viewed from the air introduction direction. Each intake portion 36j of each of the fixed funnels 36 is formed to protrude upwards and have a ring shape that is aligned with the opening 36a. As a result, when the opening 37a on the fixed funnel 36 side of the moveable funnel 37 (refer to FIG. 6 and FIG. 7) is positioned at the separated position X (the state shown in FIG. 5) away from the opening 36a on the intake side of the fixed funnel 36 (refer to FIG. 6 and FIG. 7), air can flow into the fixed funnel 36 along the intake portion 36j.

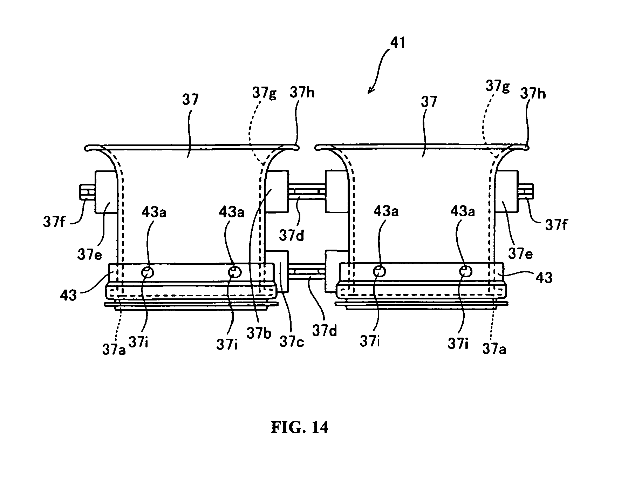

In addition, as shown in FIG. 11 and FIG. 14, the moveable funnel 37 has a structure including a neighboring pair of moveable funnels 37 that are integrated using an up-down pair of support shafts 37b and 37c (refer to FIG. 14). More particularly, this embodiment includes two members 41 that integrate neighboring pairs of the moveable funnels 37. In addition, the pair of support shafts 37b and 37c is positioned between the pair of moveable funnels 37 of each member 41. Further, the up-down pair of support shafts 37b and 37c provides support such that a fitting member 46a of the upper side link lever 46 and a fitting member 47a of the lower side link lever 47, described hereinafter, are turnable. Note that, the support shaft 37b at the upper side is one example of a "first support member" of the invention, and the support shaft 37c on the lower side is one example of a "second support member" of the invention. In addition, a small diameter portion 37d is formed respectively in each of the support shafts 37b and 37c, as shown in FIG. 14.

Moreover, as shown in FIG. 7, a split bush 42a is fitted to each of the small diameter portions 37d of the support shafts 37b and 37c of each moveable funnel 37 (the member 41). The split bush 42a functions to allow the upper side link lever 46, described hereinafter, to turn smoothly with respect to the support shaft 37b, and functions to allow the lower side link lever 47 to turn smoothly with respect to the support shaft 37c. In addition, the split bush 42b, as shown in FIG. 9 and FIG. 11, is fitted to small diameter portions 37f of the support shafts 37e positioned between the members 41 that integrate the pairs of moveable funnels 37. Note that, just one split bush 42b is positioned between the members 41 that integrate the pairs of moveable funnels 37, and straddles between the small diameter portions 37f of the pair of support shafts 37e.

Furthermore, as shown in FIG. 11, when viewed from the direction in which air is introduced, intake portions 37h are formed respectively in each opening 37g on the intake side of the moveable funnel 37, and are formed to enlarge toward the outside in the radial direction of the moveable funnel 37. Each of the intake portions 37h of the moveable funnels 37 is formed to protrude upward. In addition, ends of each intake portion 37h in the vehicle width direction are formed to extend linearly in the running direction (the direction of arrow FWD). Furthermore, an upper section of the screw insertion hole 36c on the opposite side to the running direction (the direction of arrow FWD) of each intake portion 37h is formed with a notch shape to allow the screw 62 to be easily placed in the screw insertion hole 36c of the fixed funnel 36.

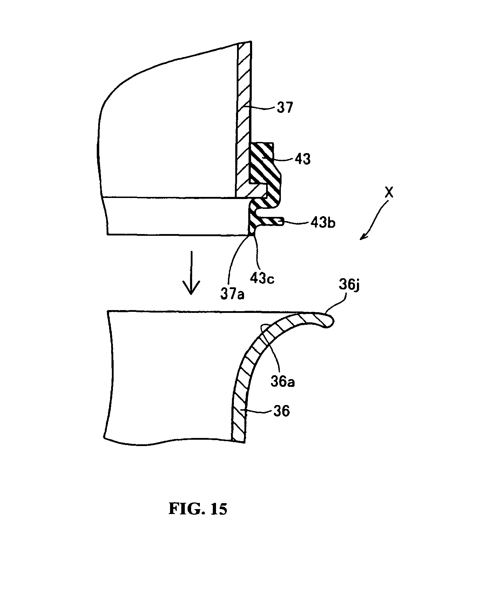

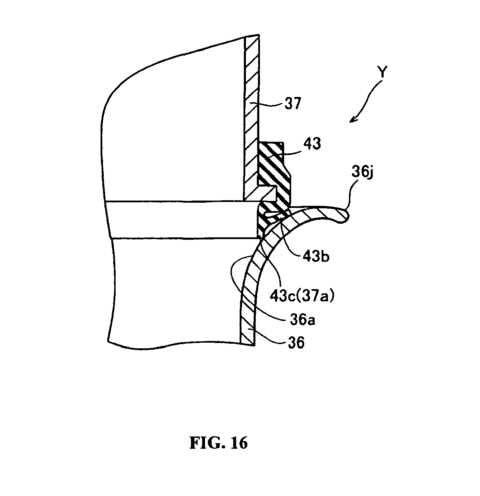

Moreover, as shown in FIG. 5 and FIG. 8, the rubber made seal member 43 is fitted to the lower end section of each moveable funnel 37 at the fixed funnel 36 side. Four engagement holes 43a are provided in the seal member 43, as can be seen from FIG. 14. Four protrusions 37i of the moveable funnel 37 are engaged with the engagement holes 43a. As a result, the seal member 43 is inhibited from detaching away to the lower side from the lower end section of the moveable funnel 37. In addition, as shown in FIG. 15, a first seal 43b that extends toward the side, and the second seal 43c that extends downward are formed in the seal member 43. Moreover, when the moveable funnel 37 is moved to the abutting position Y (the state shown in FIG. 16) from the separated position X (the state shown in FIG. 15), the first seal 43b abuts against the fixed funnel 36 and seals the gap between the moveable funnel 37 and the fixed funnel 36. Moreover, as a result of the first seal 43b elastically deforming upward, the second seal 43c also abuts against the fixed funnel 36 and seals the gap between the moveable funnel 37 and the fixed funnel 36. In other words, the seal member 43 has a two-layer seal structure. Note that, as described above, the second seal 43c of the seal member 43 is provided at the opening 37a of the moveable funnel 37 on the intake side of the fixed funnel 36.

In addition, in this embodiment, as shown in FIG. 7 and FIG. 10, the funnel moving mechanism 38 uses the upper side link lever 46 and the lower side link lever 47, described hereinafter, to moveably support the moveable funnel 37 such that the moveable funnel 37 can move in the air introduction direction of the fixed funnel 36. More particularly, the upper side link lever 46 and the lower side link lever 47 moveably support the moveable funnel 37 such that it can move between the separated position X (the state shown in FIG. 6 and FIG. 7) and the abutting position Y (the state shown in FIG. 9 and FIG. 10).

With regard to the detailed structure of the funnel moving mechanism 38, as shown in FIG. 5 and FIG. 11, the turning shaft support hole 36f at the upper side of the support strut 36e provided in the fixed funnel 36 (the member 40) (refer to FIG. 11) turnably or rotatably support the ends of the turning shaft 44. In addition, the turning shaft support hole 36g at the lower side of the support strut 36e turnably support the ends of the turning shaft 45 (refer to FIG. 11). Note that, the turning shaft 44 is one example of a "first turning shaft" of the invention, and the turning shaft 45 is one example of a "second turning shaft" of the invention. In addition, as shown in FIG. 11, a stepped portion 44a is provided in one and the other ends of the turning shaft 44, and the stepped portion 44a is in contact with the opening ends of the turning shaft support hole 36f at the upper side of the support strut 36e via a bush, not shown in the figures. Moreover, a stepped portion 45a is provided in one and the other ends of the turning shaft 45, and the stepped portion 45a is in contact with the opening ends of the turning shaft support hole 36g at the lower side of the support strut 36e via a bush, not shown in the figures. As a result, movement of the turning shaft 44 and the turning shaft 45 in the axial direction is regulated.

In addition, in this embodiment, when viewed from the direction in which air is introduced, the turning shaft 44 at the upper side is located at a position that is further away from the center axis of the moveable funnel 37 than the turning shaft 45 at the lower side. More specifically, the turning shaft 44 at the upper side is positioned further toward the traveling direction (the direction of the arrow FWD) side than the turning shaft 45 at the lower side. In addition, the turning shaft 44, as shown in FIG. 10, is positioned at the upper side with respect to an end surface of the opening 37g (the intake portion 37h) of the intake side of the moveable funnel 37 (the opposite side to the side where the fixed funnel 36 is positioned) when the moveable funnel 37 is positioned at the abutting position Y. In other words, when the moveable funnel 37 is positioned at the abutting position Y, the turning shaft 44 is positioned further to the upper side than the upper end of the moveable funnel 37.

Furthermore, as shown in FIG. 11, the upper side link lever 46, which is made of resin, is attached respectively to one and the other end section sides of the turning shaft 44 at the upper side such that the upper side link lever 46 turns along with the turning shaft 44 at the upper side. More particularly, knurling is performed on the section where the upper side link lever 46 is attached to the turning shaft 44 at the upper side (a section that corresponds with the turning shaft insertion hole 46b, described hereinafter), and the turning shaft 44 at the upper side and the upper side link lever 46 are formed as an integrated unit. In addition, the lower side link lever 47, which is made of resin, is attached respectively to one and the other end section sides of the turning shaft 45 at the lower side such that the lower side link lever 47 turns along with the turning shaft 45 at the lower side. Moreover, the turning shaft 45 at the lower side and the lower side link lever 47, like the turning shaft 44 at the upper side and the upper side link lever 46, are formed as an integrated unit. Note that, the upper side link lever 46 is one example of a "first arm" of the invention, and the lower side link lever 47 is one example of a "second arm" of the invention.

Note that, in this embodiment, the upper side link lever 46 and the lower side link lever 47, as shown in FIG. 10, have radiuses of turn R1 and R2 that are different from each other.

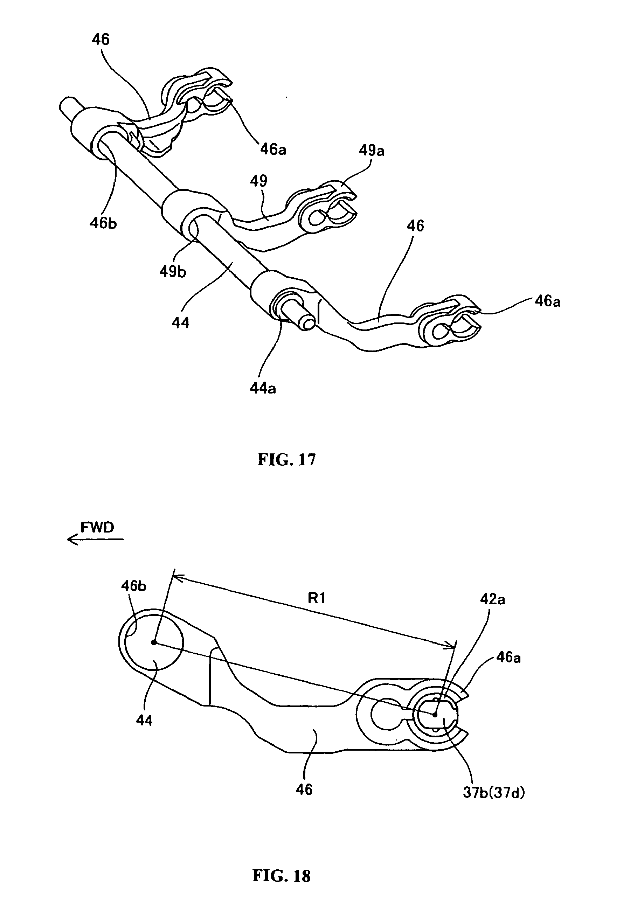

More specifically, the upper side link lever 46, as can be seen from FIG. 10 and FIG. 17, includes the fitting member 46a and the turning shaft insertion hole 46b. As shown in FIG. 10 and FIG. 18, the support shaft 37b (the small diameter portion 37d) at the upper side of the moveable funnel 37 is fitted to the fitting member 46a of the upper side link lever 46 with the split bush 42a interposed therebetween. In addition, the upper side link lever 46 turns along with turning of the turning shaft 44, turns in the same direction as the direction of turn of the turning shaft 44, and turns centering on the turning shaft insertion hole 46b. More particularly, the upper side link lever 46, as shown in FIG. 18, is structured such that the distance between the center of the fitting member 46a and the center of the turning shaft insertion hole 46b is the radius of turn R1.

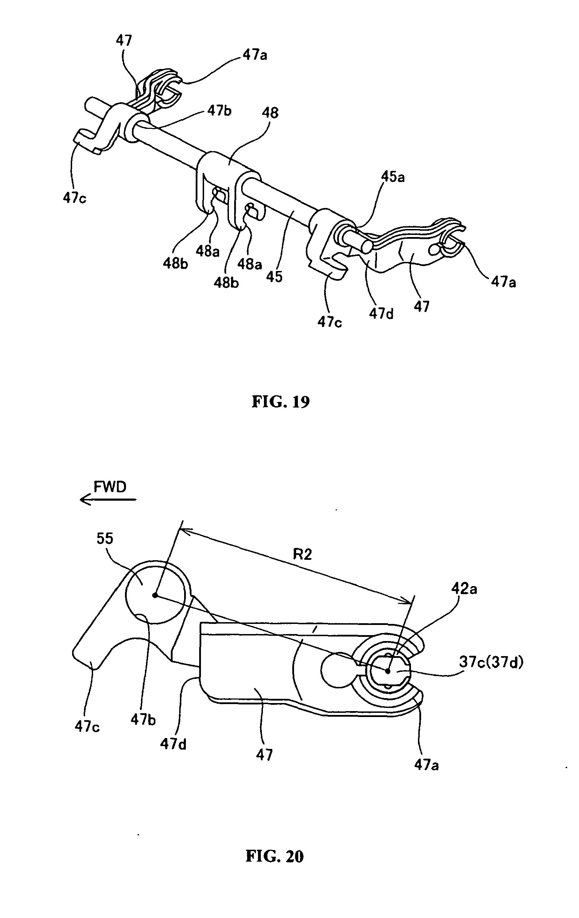

Moreover, the lower side link lever 47, as shown in FIG. 10 and FIG. 19, includes the fitting member 47a, a turning shaft insertion hole 47b, and two stoppers 47c and 47d. Note that, the stopper 47c is one example of a "first abutting member" of the invention, and the stopper 47d is one example of a "second abutting member" of the invention. The support shaft 37c (the small diameter portion 37d) at the lower side of the moveable funnel 37 is fitted to the fitting member 47a of the lower side link lever 47 with the split bush 42a interposed therebetween. In addition, the lower side link lever 47 turns along with turning of the turning shaft 45, turns in the same direction as the direction of turn of the turning shaft 45, and turns centering on the turning shaft insertion hole 47b. More particularly, the lower side link lever 47, as shown in FIG. 20, is structured such that the distance between the center of the fitting member 47a and the center of the turning shaft insertion hole 47b is the radius of turn R2.

In addition, in this embodiment, the radius of turn R1 that is the distance between the center of the fitting member 46a of the upper side link lever 46 and the center of the turning shaft insertion hole 46b is larger than the radius of turn R2 that is the distance between the center of the fitting member 47a of the lower side link lever 47 and the center of the turning shaft insertion hole 47b as shown in FIG. 10. As a result of adopting this structure, even though the turning shaft 44 of the upper side link lever 46 is positioned further toward the front in the running direction than the turning shaft 45 of the lower side link lever 47 as in this embodiment, the opening 37a of the moveable funnel 37 when the moveable funnel 37 is moved to the abutting position Y and the opening 37a of the moveable funnel 37 when the moveable funnel 37 is moved to the separated position X can be adjusted such that the positions are substantially the same when viewed from the direction in which air is introduced.

Moreover, in this embodiment, when viewed from the direction of extension of the turning shaft 44 provided in the upper side link lever 46, the upper side link lever 46 is formed such that it bends downward (in the direction where the fixed funnel 36 is disposed). In addition, the section of the upper side link lever 46 in the vicinity of the fitting member 46a is positioned further to the lower side (the side where the fixed funnel 36 is disposed) than the opening 37g (the intake portion 37h) on the intake side of the moveable funnel 37. Moreover, as shown in FIG. 11, the upper side link lever 46 and the lower side link lever 47, when viewed from the direction in which air is introduced, include an overlapping portion Z where a portion of the intake portion 37h of the moveable funnel 37 overlaps. As a result, it is possible to dispose the moveable funnel 37 including the intake portion 37h in the section where the upper side link lever 46 and the lower side link lever 47 are disposed in a space with a small size when viewed from the direction in which air is introduced. Accordingly, it is possible to effectively use the space for providing the moveable funnel 37.

Furthermore, the upper side link lever 46 and the lower side link lever 47 are respectively bent so as to avoid the upper portion (a given portion) of the two screw insertion holes 36c at the running direction (the direction of the arrow FWD) side of the fixed funnel 36 when viewed from the direction in which air is introduced. As a result, when the screws 62 are used to fix the fixed funnel 36 to the cleaner box 24 (the lower side box section 26), the screws 62 can easily be placed in the two screw insertion holes 36c at the running direction (the direction of the arrow FWD) side.

In addition, in this embodiment, as shown in FIG. 7, when the lower side link lever 47 has moved a determined turn amount in direction E (when the moveable funnel 37 has reached the separated position X), the stopper 47c of the lower side link lever 47 abuts against the regulation member 36i of the support strut 36e of the fixed funnel 36. Thus, the stopper 47c functions to regulate turning in direction E of the lower side link lever 47. Note that, direction E is one example of a "second direction" of the invention. In addition, when the moveable funnel 37 has reached the separated position X, the stopper 47 is fitted within the recess of the regulation member 36i. Moreover, as shown in FIG. 10, when the lower side link lever 47 has moved a determined turn amount in direction F (when the moveable funnel 37 has reached the abutting position Y), the stopper 47d abuts against a rear portion of the support strut 36e of the fixed funnel 36. Thus, the stopper 47d functions to regulate turning in direction F of the lower side link lever 47. Note that, direction F is one example of a "first direction" of the invention. In addition, the stopper 47d abuts against the rear portion of the support strut 36e in the case that the elastic force of the above-described rubber made seal member 43 has weakened, but in the case that the elastic force of the seal member 43 has not weakened, the stopper 47d does not abut against the support strut 36e.

In addition, the stoppers 47c and 47d of the lower side link lever 47 protrude downward (the side opposite to the side where the upper side link lever 46 is disposed). As a result, the distance between the upper side link lever 46 and the lower side link lever 47 can be made smaller. As a result, even in the case that the upward-downward direction length of the moveable funnel 37 is small, the moveable funnel 37 can be attached without any contact of the upper side link lever 46 and the lower side link lever 47. Moreover, as shown in FIG. 19, the stoppers 47c and 47d of the lower side link lever 47 protrude toward the outside in the vehicle width direction.

Furthermore, as can be seen from FIG. 5 and FIG. 8, a support portion 48 that turns along with the turning shaft 45 is provided in the turning shaft 45 at the lower side. The support portion 48 is formed by a pair of retaining tabs 48b in which notches 48a (refer to FIG. 8) are respectively formed.

In addition, referring to FIG. 6 and FIG. 9, an intermediate link lever 49 is turnably attached to the split bush 42b fitted to the support shaft 37e (the small diameter portion 37f) positioned between the members 41 (refer to FIG. 11). More particularly, a fitting member 49a that can be engaged with the split bush 42b is formed at one side of the intermediate link lever 49. The fitting member 49a can turnably be engaged with the split bush 42b. Moreover, the intermediate link lever 49 is formed integrally with the turning shaft 44 at the upper side in a similar manner to the upper side link lever 46 and the lower side link lever 47. In other words, the turning shaft 44 is fitted to the turning shaft insertion hole 49b such that the intermediate link lever 49 can turn along with the turning shaft 44 at the upper side.

As a result of the support portion 48, the upper side link lever 46 and the lower side link lever 47 having the above-described structure, as shown in FIG. 6 and FIG. 7, when the lower side link lever 47 turns in direction E (refer to FIG. 7) as a result of the support portion 48 being turned in direction E (refer to FIG. 6), the moveable funnel 37 is moved in the direction away from the fixed funnel 36. Moreover, as shown in FIG. 9 and FIG. 10, when the lower side link lever 47 turns in direction F (refer to FIG. 10) as a result of the support portion 48 being turned in direction F (refer to FIG. 9), the moveable funnel 37 is moved in the direction toward the fixed funnel 36. Note that, as shown in FIG. 7 and FIG. 10, the turn amount of the upper side link lever 46 and the lower side link lever 47 is adjusted such that, when viewed from the opening direction of the fixed funnel 36, the position of the opening surface of the moveable funnel 37 on the side of the opening 36a of the fixed funnel 36 at the separated position X (the state shown in FIG. 7) is the same as the position of the opening surface of the moveable funnel 37 on the side of the opening 36a of the fixed funnel 36 at the abutting position Y (the state shown in FIG. 10). Accordingly, when the engine 14 is rotating at high speed, even if the opening 37a of the moveable funnel 37 is separated away from the opening 36a of the fixed funnel 36, the flow of air which is taken in through the fixed funnel 36 after passing through the moveable funnel 37 is linear. Accordingly, increase in air flow resistance can be inhibited. As a result, when the engine 14 is rotating at high speed (in the case that the moveable funnel 37 is separated away from the fixed funnel 36), it is possible to inhibit reduction in air intake efficiency.

Moreover, as can be seen from FIG. 11, the upper side link lever 46 and the lower side link lever 47 (refer to FIG. 5) turn as a result of driving force of a motor 50 that is positioned to the outside of the cleaner box 24 (refer to FIG. 3). More particularly, the motor 50 is disposed to the rear side of the moveable funnel 37 in the running direction (the direction of the arrow FWD) of the vehicle. Note that, the motor 50 is one example of a "driving source" of the invention. Furthermore, an end section of one end of a turning lever 51 is attached to an output shaft 50a of the motor 50, as shown in FIG. 6. An end section of the other end of the turning lever 51 is provided with a retaining portion 51a that is formed as a notch.

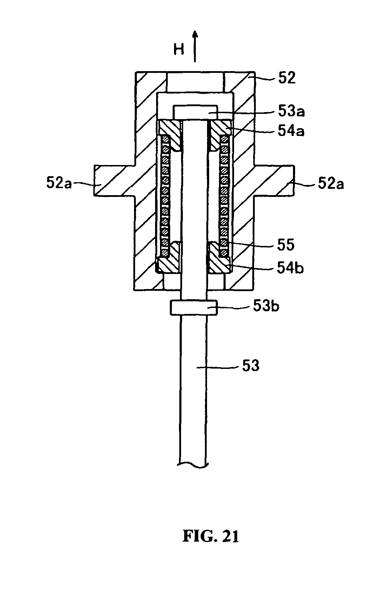

The turning lever 51, as shown in FIG. 3, is disposed inside the lower side box section 26 (a protruding portion 26d) via an opening 26e of the protruding portion 26d of the lower side box section 26 of the cleaner box 24. In addition, as shown in FIG. 6, protrusions 52a provided at both side surfaces of a moving member 52 are attached to the retaining portion 51a of the turning lever 51 such that it is possible to swing with respect to the retaining portion 51a. Furthermore, referring to FIG. 21, one end of a moving shaft 53 is disposed inside the moving member 52. Note that, the moving shaft 53 is one example of a "rod member" of the invention.

In addition, the moving shaft 53, as shown in FIG. 11, is disposed between the two members 41 (the moveable funnels 37). Moreover, an upper side pressing portion 53a and a lower side pressing portion 53b are provided at a determined distance of separation in the moving shaft 53. In addition, bushes 54a and 54b are provided inside the moving member 52 and support the moving shaft 53 such that it can slide. The bushes 54a and 54b are positioned between the upper side pressing portion 53a and the lower side pressing portion 53b. In addition, a compression spring 55 is fitted between the bush 54a and the bush 54b inside the moving member 52. The compression spring 55 is one example of an "urging member" of the invention. Moreover, the support shaft 56 is provided at the other end of the moving shaft 53, as shown in FIG. 6. The notch 48a of the support portion 48 that turns along with the turning shaft 45 is engaged with the support shaft 56.

In addition, when the turning lever 51 is turned in direction G by driving force of the motor 50 (the state shown in FIG. 6), as shown in FIG. 21, the moving member 52 moves in direction H thereby causing urging force in direction H to be generated in the compression spring 55. As a result, the moving shaft 53 is urged in direction H by the compression spring 55. Thus, as shown in FIG. 6, the urging force of the compression spring 55 (refer to FIG. 21) is transmitted to the lower side link lever 47 via the moving shaft 53, the support portion 48, and the turning shaft 45 at the lower side, whereby the upper side link lever 46 and the lower side link lever 47 are turned in direction E. Furthermore, as shown in FIG. 7, even when the stopper 47c of the lower side link lever 47 abuts against the regulation member 36i of the support strut 36e, the urging force of the compression spring 55 (refer to FIG. 21) is transmitted to the upper side link lever 46 and the lower side link lever 47 via the moving shaft 53 so that the upper side link lever 46 and the lower side link lever 47 are turned in direction E. As a result, when the stopper 47c abuts against the regulation member 36i of the support strut 36e due to the lower side link lever 47 turning in direction E (when the moveable funnel 37 reaches the separated position X), the urging force of the compression spring 55 can hold the stopper 47c of the lower side link lever 47 in a state in which the stopper 47c abuts against the regulation member 36i of the support strut 36e. Thus, when the moveable funnel 37 is held at the separated position X, the moveable funnel 37 can be inhibited from moving to a position that deviates from the separated position X.

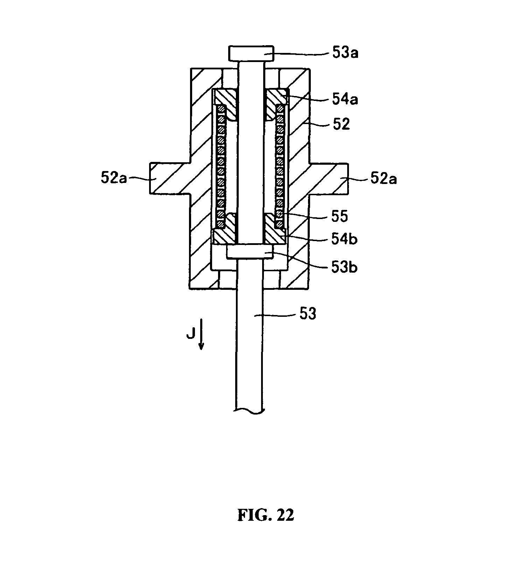

On the other hand, when the turning lever 51 is turned in direction I by driving force of the motor 50 (the state shown in FIG. 9), as shown in FIG. 22, the moving member 52 moves in direction J thereby causing urging force in direction J to be generated in the compression spring 55. As a result, the moving shaft 53 is urged in direction J by the compression spring 55. Thus, as shown in FIG. 9, the urging force of the compression spring 55 (refer to FIG. 22) is transmitted to the lower side link lever 47 via the moving shaft 53, the support portion 48, and the turning shaft 45 at the lower side, whereby the upper side link lever 46 and the lower side link lever 47 are turned in direction F. Furthermore, as shown in FIG. 10, even when the seal member 43 abuts against the opening 36a of the fixed funnel 36 (when the stopper 47d of the lower side link lever 47 abuts against the support strut 36e), the urging force of the compression spring 55 (refer to FIG. 22) is transmitted to the upper side link lever 46 and the lower side link lever 47 via the moving shaft 53 so that the upper side link lever 46 and the lower side link lever 47 are turned in direction F. As a result, when the seal member 43 abuts against the opening 36a of the fixed funnel 36 due to the lower side link lever 47 turning in direction F (when the stopper 47d abuts against the support strut 36e), the urging force of the compression spring 55 can hold the seal member 43 in a state in which the seal member 43 abuts against the opening 36a of the fixed funnel 36 (a state where the stopper 47d of the lower side link lever 47 abuts against the support strut 36e). Thus, when the moveable funnel 37 is held at the abutting position Y, the moveable funnel 37 can be inhibited from moving to a position that deviates from the abutting position Y.

A changeover operation that changes the length of the intake pipe between when the engine 14 is rotating at high speed and low speed will now be explained with reference to FIG. 3, FIG. 6, FIG. 7, FIG. 9, FIG. 10, FIG. 21 and FIG. 22.

When the engine 14 rotates at high speed as shown in FIG. 3, the intake pipe is shortened in order to obtain optimal intake air inertia effect and pulsation effect. More particularly, when the engine 14 is rotating at high speed, the moveable funnel 37 is moved to the separated position X. Note that, the intake air inertia effect and pulsation effect indicate improvement in the engine intake air charging efficiency as a result of pressure variation of the intake pipe, determined by the effective intake pipe length, the effective intake pipe diameter and the effective open/close period of the intake valve, being favorable for the intake valve opening/closing timing.

More particularly, first, as shown in FIG. 6, the turning lever 51 is turned in direction G by the motor 50 of the funnel moving mechanism 38, thereby moving the moving member 52 in direction H. As a result, urging force in direction H of the compression spring 55 is generated (refer to FIG. 21) and causes the moving shaft 53 to move in direction H, thereby causing the lower side link lever 47 (refer to FIG. 7) to turn in direction E. Following this, as shown in FIG. 7, the lower side link lever 47 continues to turn in direction E until the stopper 47c of the lower side link lever 47 abuts against the regulation member 36i of the support strut 36e.

As a result, the moveable funnel 37 moves to the separated position X. Accordingly, when the engine 14 is rotating at high speed (refer to FIG. 3), the intake pipe is formed by the fixed funnel 36, the throttle body 18 (refer to FIG. 3) and the intake port 17a (refer to FIG. 3), and thus the intake pipe is made shorter. Note that, when the engine 14 shown in FIG. 3 is rotating at high speed, because the intake pipe is made shorter, the pressure variation cycle caused by the intake air inertia effect and pulsation effect becomes quicker, and is synchronized with the high speed opening and closing of the intake valve 19a. Accordingly, intake air charging efficiency at high speed rotation is improved.

Note that, as shown in FIG. 6, when the moveable funnel 37 reaches the separated position X, the position of the opening of the moveable funnel 37 on the side of the opening 36a of the fixed funnel 36 when viewed from the opening direction of the fixed funnel 36, and the position of the opening of the moveable funnel 37 on the side of the opening 36a of the fixed funnel 36 when the moveable funnel 37 is in the abutting position Y (the state shown in FIG. 9) is substantially the same. Moreover, when the moveable funnel 37 reaches the separated position X, the urging force of the compression spring 55 (refer to FIG. 22) is transmitted to the lower side link lever 47 via the moving shaft 53 such that the upper side link lever 46 and the lower side link lever 47 are turned in direction E.

Note that, in this embodiment, when the engine 14 rotates at high speed, fuel is injected from not only the injector 20 but also the injector 39. More particularly, the injector 39 injects fuel while the moveable funnel 37 is moving to the separated position X.

When the engine 14 shown in FIG. 3 rotates at low speed, the intake pipe is lengthened in order to obtain optimal intake air inertia effect and pulsation effect. More particularly, when the engine 14 is rotating at low speed, the moveable funnel 37 is moved to the abutting position Y.

More specifically, as shown in FIG. 9, the turning lever 51 is turned in direction I by the motor 50 of the funnel moving mechanism 38, thereby moving the moving member 52 in direction J. As a result, urging force in direction J is generated by the compression spring 55 (refer to FIG. 22), and causes the moving shaft 53 to move in direction J, thereby causing the lower side link lever 47 (refer to FIG. 10) to turn in direction F. Following this, as shown in FIG. 10, the lower side link lever 47 continues to turn in direction F until the stopper 47d of the lower side link lever 47 abuts against the support strut 36e.

As a result, the moveable funnel 37 is moved to the abutting position Y. Accordingly, when the engine 14 is rotating at low speed (refer to FIG. 3), the intake pipe is formed by the moveable funnel 37, the fixed funnel 36, the throttle body 18 (refer to FIG. 3) and the intake port 17a (refer to FIG. 3), and thus the intake pipe is made longer. Note that, when the engine 14 shown in FIG. 3 is rotating at low speed, because the intake pipe is made longer, the pressure variation cycle caused by the intake air inertia effect and pulsation effect becomes longer, and is synchronized with the low speed opening and closing of the intake valve 19a. Accordingly, in-intake efficiency at low speed rotation is improved.

Note that, as shown in FIG. 7, when the moveable funnel 37 reaches the abutting position Y, the urging force of the compression spring 55 (refer to FIG. 22) is transmitted to the lower side link lever 47 via the moving shaft 53 such that the upper side link lever 46 and the lower side link lever 47 are turned in direction F.

In this embodiment, as described above, the upper side link lever 46 and the lower side link lever 47 are provided that have radiuses of turn R1 and R2 that are different from each other and that support the moveable funnel 37 that it can move in the air introduction direction of the fixed funnel 36. As a result of providing the upper side link lever 46 and the lower side link lever 47 that have the different radiuses of turn R1 and R2, when the opening 37a at the fixed funnel 36 side of the moveable funnel 37 is separated away from the opening 36a at the intake side of the fixed funnel 36, the opening 37a on the fixed funnel 36 side of the moveable funnel 37 is located in the same position as the opening 36a at the intake side of the fixed funnel 36 when viewed from the direction in which air is introduced. As a result, the flow of air that is taken in through the fixed funnel 36 having passed through the moveable funnel 37 is linear, and thus it is possible to inhibit air flow resistance from increasing. Accordingly, when the moveable funnel 37 is separated away from the fixed funnel 36, it is possible to inhibit reduction in air intake efficiency. Furthermore, as a result of the radiuses of turn (the arm length) of the upper side link lever 46 and the lower side link lever 47 being different from each other, even though it would not be possible to position the upper side link lever 46 and the lower side link lever 47 if they had the same length due to space considerations, it is possible to easily position the upper side link lever 46 and the lower side link lever 47. As a result, reduction in the degree of freedom of the arrangement of the upper side link lever 46 and the lower side link lever 47 for moving the moveable funnel 37 is inhibited. In addition, when the opening 37a at the fixed funnel 36 side of the moveable funnel 37 is separated away from the opening 36a at the intake side of the fixed funnel 36, the opening 37a at the fixed funnel 36 side of the moveable funnel 37 is located at the same position as the opening 36a at the intake side of the fixed funnel 36 when viewed from the direction in which air is introduced.

Furthermore, in this embodiment, as described above, the radius of turn R1 of the upper side link lever 46 and the radius of turn R2 of the lower side link lever 47 can be adjusted such that the opening 37a at the fixed funnel 36 side of the moveable funnel 37 when the moveable funnel 37 is moved to the abutting position Y and the opening 37a at the fixed funnel 36 side of the moveable funnel 37 when the moveable funnel 37 is moved to the separated position X are at substantially the same position when viewed from the direction in which air is introduced. As a result, the flow of air that is taken in through the fixed funnel 36 having passed through the moveable funnel 37 can easily be made linear, and thus it is simply possible to inhibit flow resistance of the air from increasing.

Moreover, in this embodiment, as described above, the distance between the turning shaft 44 of the upper side link lever 46 and the support shaft 37b at the upper side of the moveable funnel 37 (the radius of turn R1) is set larger than the distance between the turning shaft 45 of the lower side link lever 47 and the support shaft 37c at the lower side of the moveable funnel 37 (the radius of turn R2). Even when the turning shaft 44 of the upper side link lever 46 is positioned further to the running direction side than turning shaft 45 of the lower side link lever 47, however, the radius of turn R1 of the upper side link lever 46 and the radius of turn R2 of the lower side link lever 47 can be appropriately adjusted in order to adjust the position of the opening 37a of the moveable funnel 37 when the moveable funnel 37 is moved to the abutting position Y and the position of the opening 37a of the moveable funnel 37 when the moveable funnel 37 is moved to the separated position X to be substantially the same when viewed from the direction in which air is introduced.

In addition, in this embodiment, as described above, when the moveable funnel 37 is positioned in the abutting position Y, the turning shaft 44 of the upper side link lever 46 is positioned on the opposite side (the upper side) to the side where the fixed funnel 36 is disposed with respect to the opening 37g (the intake portion 37h) on the intake side of the moveable funnel 37. As a result, the distance between the upper side link lever 46 and the lower side link lever 47 can be made larger. Accordingly, the moveable funnel 37 can be moved while inhibiting contact of the upper side link lever 46 and the lower side link lever 47.

Furthermore, in this embodiment, as described above, the section of the upper side link lever 46 in the vicinity of the support shaft 37b at the upper side of the moveable funnel 37 is positioned further to the side where the fixed funnel 36 is disposed (the lower side) than the opening 37g (the intake portion 37h) at the intake side of the moveable funnel 37. As a result, it is possible to inhibit the upper side link lever 46 from causing any interference to the flow of air that is taken in from the intake portion 37h of the moveable funnel 37. Accordingly, increase in air flow resistance can be inhibited even more.

In addition, in this embodiment, as described above, the turning shaft 44 of the upper side link lever 46 is located at a position that is further away from the moveable funnel 37 than the turning shaft 45 of the lower side link lever 47 when viewed from the direction in which air is introduced. As a result, the distance between the shafts of the turning shaft 44 and the turning shaft 45 can be made larger, thereby allowing the distance between the upper side link lever 46 and the lower side link lever 47 to be made larger.

Moreover, in this embodiment, as described above, the upper side link lever 46 and the lower side link lever 47 are bent so as to avoid, when the fixed funnel 36 is fixed to the cleaner box 24, the screw insertion holes 36c at the running direction (the direction of the arrow FWD) side of the fixed funnel 36 when viewed from the direction in which air is introduced. As a result, the screws 62 can be placed in the screw insertion holes 36c via the bent section of the upper side link lever 46 and the lower side link lever 47. Accordingly, the screws 62 can be placed into the screw insertion holes 36c without interference with placement by the upper side link lever 46 and the lower side link lever 47. As a result, the ease of the operation for assembling the fixed funnel 36 to the lower side box section 26 is improved. Furthermore, the bent section of the upper side link lever 46 and the lower side link lever 47 also allows a passage for a determined tool to be used for placement of the screws 62 in the screw insertion holes 36c.

In addition, in this embodiment, as described above, the upper side link lever 46 and the lower side link lever 47 have at least one section that overlaps with the intake portion 37h of the moveable funnel 37 when viewed from the direction in which air is introduced. As a result, it is possible to dispose the moveable funnel 37 including the intake portion 37h in the section where the upper side link lever 46 and the lower side link lever 47 are disposed in a space with a small size when viewed from the direction in which air is introduced. Accordingly, it is possible to effectively use the space for providing the moveable funnel 37.

Moreover, in this embodiment, as described above, the stopper 47c is provided that regulates turning in direction E of the lower side link lever 47 by abutting against the support strut 36e of the fixed funnel 36 when the opening 37a at the fixed funnel 36 side of the moveable funnel 37 is turned in direction E that is away from the opening 36a at the intake side of the fixed funnel 36. As a result of providing the stopper 47c, the moveable funnel 37 can be inhibited from moving further upward than the determined position.

In addition, in this embodiment, as described above, the stopper 47d is provided that regulates turning in direction F of the lower side link lever 47 by abutting against the support strut 36e of the fixed funnel 36 when the opening 37a at the fixed funnel 36 side of the moveable funnel 37 is turned in direction F that is toward the opening 36a at the intake side of the fixed funnel 36. As a result of providing the stopper 47d, the moveable funnel 37 can be inhibited from moving further downward than the determined position.

Moreover, in this embodiment, as described above, the groove shaped regulation member 36i is provided in the support strut 36e of the fixed funnel 36, and abuts against the stopper 47c of the lower side link lever 47. Accordingly, when the moveable funnel 37 is moved to the separated position X, the stopper 47c can be turn such that it fits in the regulation member 36i. In other words, as compared to if the regulation member 36i does not have a groove shape, compactness of the support strut 36e in the front-rear direction can be improved.

In addition, in this embodiment, as described above, the stoppers 47c and 47d of the lower side link lever 47 protrude toward the opposite side (the lower side) to the side where the upper side link lever 46 is disposed. Therefore, the stoppers 47c and 47d are not disposed between the upper side link lever 46 and the lower side link lever 47, and thus the distance between the upper side link lever 46 and the lower side link lever 47 can be made smaller.

Moreover, in this embodiment, as described above, the turning shaft 45 of the lower side link lever 47 is turned by transmission of urging force of the compression spring 55 to the moving shaft 53 via the moving member 52. In addition, when the stopper 47c abuts against the support strut 36e due to turning of the lower side link lever 47 in direction E, the urging force of the compression spring 55 is transmitted to the lower side link lever 47 via the moving member 52 such that the lower side link lever 47 turns in direction E. Moreover, when the stopper 47d abuts against the support strut 36e due to turning of the lower side link lever 47 in direction F, the urging force of the compression spring 55 is transmitted to the lower side link lever 47 via the moving member 52 such that the lower side link lever 47 turns in direction F. In this manner, when the stopper 47c abuts against the support strut 36e due to the lower side link lever 47 turning in direction E (when the moveable funnel 37 reaches the separated position X), the urging force of the compression spring 55 can hold the stopper 47c of the lower side link lever 47 in an abutting state with the support strut 36e. Accordingly, when the moveable funnel 37 is held at the separated position X, it is possible to inhibit the moveable funnel 37 from moving to a position that deviates from the separated position X. In addition, when the stopper 47d abuts against the support strut 36e due to the lower side link lever 47 turning in direction F (when the moveable funnel 37 reaches the abutting position Y), the urging force of the compression spring 55 can hold the stopper 47d of the lower side link lever 47 in an abutting state with the support strut 36e. Accordingly, when the moveable funnel 37 is held at the abutting position Y, it is possible to inhibit the moveable funnel 37 from moving to a position that deviates from the abutting position Y.

Note that, the embodiment as described above is, in all of its features, merely an example, and it should be understood that the embodiment does not limit the invention in any way. The scope of the invention is not limited by the above description but instead encompasses the scope of the claims. Moreover, the invention includes all modified forms that come within the scope of the claims or are equivalent thereto.

For example, in the above-described embodiment, an example is described in which the invention is applied to a motorcycle. However, the invention is not limited to this configuration, and may be applied to a vehicle other than a motorcycle.

Furthermore, in the above-described embodiment, the invention is applied to a vehicle equipped with a four cylinder engine. However, the invention is not limited to this configuration, and may be applied to a vehicle equipped with an engine that has more than four cylinders, or a vehicle equipped with an engine with a single cylinder.

Furthermore, in this embodiment, an example is described in which the upper side link lever and the lower side link lever have a structure in which the length of the upper side link lever is longer than the length of the lower side link lever. However, the invention is not limited to this configuration, and may adopt a structure in which the length of the lower side link lever is longer than the length of the upper side link lever.

Furthermore, in this embodiment, an example is described in which the opening of the moveable funnel on the fixed funnel side when the moveable funnel is moved to the abutting position and the opening of the moveable funnel on the fixed funnel side when the moveable funnel is moved to the separated position can be adjusted to be in substantially the same position when viewed in a plane. However, the invention is not limited to this configuration, and may adopt a configuration in which the opening of the moveable funnel at the fixed funnel side when the moveable funnel is moved to the separated position and the opening of the moveable funnel at the fixed funnel side when the moveable funnel is moved to the abutting position can be adjusted to be in positions in the vicinity of each other and not substantially in the same position when viewed in a plane.

In addition, in this embodiment, an example is described in which the upper side link lever and the lower side link lever are bent to avoid the screw insertion holes at the running direction (the direction of the arrow FWD) side of the fixed funnel when viewed in a plane. However, the invention is not limited to this configuration and the upper side link lever and the lower side link lever may be curved not bent in order to avoid the screw insertion holes at the running direction (the direction of the arrow FWD) side of the fixed funnel when viewed in a plane.

### Description of the Reference Numerals and Signs

- 1: Motorcycle (Vehicle)
- 14: Engine
- 17a: Intake port
- 24: Cleaner box (Air chamber)
- 36: Fixed funnel
- 36a: Opening (Intake opening)
- 36e: Support strut
- 36i: Regulation member (Receiving member)
- 37: Moveable funnel
- 37a: Opening
- 37b: Support shaft (First support member)
- 37c: Support shaft (Second support member)
- 37g: Opening
- 37h: Intake portion
- 44: Turning shaft (First turning shaft)
- 45: Turning shaft (Second turning shaft)
- 46: Upper side link lever (First arm)
- 47: Lower side link lever (Second arm)
- 47c: Stopper (First abutting portion)
- 47d: Stopper (Second abutting portion)
- 50: Motor (driving source)
- 52: Moving member
- 53: Moving shaft (Rod member)
- 55: Compression spring (Urging member)
- 62: Screw (Fixing member)
- E: direction Second direction
- F: direction First direction
- R1: Radius of turn (Distance)
- R2: Radius of turn (Distance)

## Claims

1. An engine (14) comprising:
an intake port (17a);
a fixed funnel (36) that introduces air to the intake port (17a) of the engine (14);
a moveable funnel (37) capable of moving toward an intake opening of the fixed funnel (36), and that along with the fixed funnel (36) introduces air to the intake port (17a) of the engine (14); and
an arm arrangement that supports the moveable funnel (37) such that the movable funnel (37) can be moved with an air introduction direction of the fixed funnel (36); **characterized in that**
the arm arrangement includes a first arm (46) that turns with a first radius of turn (R1), and a second arm (47) that turns with a second radius of turn (R2) that is different to the first radius of turn (R1).

2. A vehicle (1) comprising an engine (14) according to claim 1.

3. The vehicle (1) according to claim 2, wherein
the moveable funnel (37) is moved between a first position where an opening on the fixed funnel side of the moveable funnel (37) abuts against an opening on an intake side of the fixed funnel (36), and a second position where the opening on the fixed funnel side is separated from the opening on the intake side of the fixed funnel (36); and
the first radius of turn (R1) of the first arm (46) and the second radius of turn (R2) of the second arm (47) are such that the opening on the fixed funnel side of the moveable funnel (37) when the moveable funnel (37) is moved to the first position and the opening on the fixed funnel side of the moveable funnel (37) when the moveable funnel (37) is moved to the second position are aligned when viewed from the air introduction direction.

4. The vehicle (1) according to claim 2 or 3, further comprising:
a first turning shaft (44), provided on one side of the first arm (46), that supports the first arm (46); and
a second turning shaft (45), provided on one side of the second arm (47), that supports the second arm (47), wherein
the moveable funnel (37) includes a first support portion that supports the other side of the first arm (46), and a second support portion that supports the other side of the second arm (47),
a distance between the first turning shaft (44) of the first arm (46) and the first support portion of the moveable funnel (37) is larger than a distance between the second turning shaft (45) of the second arm (47) and the second support portion of the moveable funnel (37).

5. The vehicle (1) according to claim 4, wherein
the moveable funnel (37) is moved between a first position where an opening on the fixed funnel side of the moveable funnel (37) abuts against an opening on an intake side of the fixed funnel (36), and a second position where the opening on the fixed funnel side is separated from the opening on the intake side of the fixed funnel (36), and
when the moveable funnel (37) is positioned at the first position, the first turning shaft (44) of the first arm (46) is disposed above an end surface of the opening at the intake side of the moveable funnel (37).

6. The vehicle (1) according to claim 4 or 5, wherein the first arm (46) extends from the first turning shaft (44) towards the fixed funnel (36).

7. The vehicle (1) according to claim 4, 5 or 6, wherein the first support portion of the moveable funnel (37) that supports the first arm (46) is disposed on the fixed funnel side with respect to an end surface of the opening at the intake side of the moveable funnel (37).

8. The vehicle (1) according to any one of claims 4 to 7, wherein the first turning shaft (44) of the first arm (46) is located at a position that is further away from a center of the moveable funnel (37) than the turning shaft of the second arm (47).

9. The vehicle (1) according to any of claims 2 to 8, further comprising:
an air chamber (24) connected to the fixed funnel (36); and
a fixing member (62) that fixes the air chamber (24) to the fixed funnel (36), wherein
the arm arrangement is arranged to avoid a section of the fixing member (62) of the fixed funnel (36).

10. The vehicle (1) according to any of claims 2 to 9, wherein
the moveable funnel (37) includes an intake portion, formed using at least a portion of the opening of the intake side of the moveable funnel (37), that enlarges to the outside in the radial direction of the moveable funnel (37), and
the arm arrangement includes an overlapping portion having at least one portion that overlaps with the intake portion of the moveable funnel (37).

11. The vehicle (1) according to of claims 2 to 10, wherein
the fixed funnel (36) includes a support strut that supports a first turning shaft (44) of the first arm (46) and a second turning shaft (45) of the second arm (47),
and
the second arm (47) includes a first abutting member (47c) that, when the opening at the fixed funnel side of the moveable funnel (37) is turned in a second direction to separate from the opening at the intake side of the fixed funnel (36), abuts against the support strut of the fixed funnel (36) to inhibit the second arm (47) from turning more than necessary in the second direction.

12. The vehicle (1) according to claim 11, wherein
the second arm (47) includes a second abutting member (47d) that, when the opening at the fixed funnel side of the moveable funnel (37) is turned in a first direction to abut against the opening at the intake side of the fixed funnel (36), abuts against the support strut of the fixed funnel (36) to inhibit the second arm (47) from turning more than necessary in the first direction.

13. The vehicle (1) according to claim 12, wherein the support strut of the fixed funnel (36) includes a receiving portion with a groove shape against which the first abutting portion of the second arm (47) abuts.

14. The vehicle (1) according to claim 12 or 13, where the first abutting portion (47c) and the second abutting portion (47d) of the second arm (47) protrude toward the opposite side from a side where the first arm (46) is disposed.

15. The vehicle (1) according to claim 12, 13 or 14, further comprising:
a driving source (50), disposed to a side of the moveable funnel (37), and adapted to drive the moveable funnel (37);
a second shaft, provided on the other side of the second arm (47), that turns along with the second arm (47) :
a rod member (53), connected between the driving source (50) and the second turning shaft (45), that turns the second arm (47) by transmitting driving force of the driving source (50) to the second turning shaft (45);
a moving member (52) that supports and moves the rod member (53); and
an urging member (55) that urges the moving member (52), wherein
urging force of the urging member (55) is transmitted to the rod member (53) via the moving member (52) to turn the second turning shaft (45),
the second arm (47) turns along with turning of the second turning shaft (45), and
when the first abutting portion (47c) abuts against the support strut (36e) due to turning of the second arm (47) in the second direction, the urging force of the urging member (55) is transmitted to the second arm (47) via the moving member (52) such that the second arm (47) turns in the second direction, and
when the second abutting portion (47d) abuts against the support strut due to turning of the second arm (47) in the first direction, the urging force of the urging member (55) is transmitted to the second arm (47) via the moving member (52) such that the second arm (47) turns in the first direction.

## Patentansprüche

1. Motor (14), der aufweist:
einen Ansaugkanal (17a);
einen stationären Trichter (36), der Luft in den Ansaugkanal (17a) des Motors (14) einführt;
einen beweglichen Trichter (37), der sich in Richtung einer Ansaugöffnung des stationären Trichters (36) bewegen kann, und der zusammen mit dem stationären Trichter (36) Luft in den Ansaugkanal (17a) des Motors (14) einführt; und
eine Armanordnung, die den beweglichen Trichter (37) trägt, so dass der bewegliche Trichter (37) im Hinblick auf eine Lufteinführrichtung des stationären Trichters (36) bewegt werden kann; **dadurch gekennzeichnet, dass**
die Armanordnung einen ersten Arm (46), der sich mit einem ersten Drehungsradius (R1) dreht, und einen zweiten Arm (47) umfasst, der sich mit einem zweiten Drehungsradius (R2) dreht, der vom ersten Drehungsradius (R1) abweicht.

2. Fahrzeug (1), das einen Motor (14) nach Anspruch 1 aufweist.

3. Fahrzeug (1) nach Anspruch 2, bei dem
der bewegliche Trichter (37) zwischen einer ersten Position, wo eine Öffnung auf der Seite des stationären Trichters des beweglichen Trichters (37) an eine Öffnung auf einer Ansaugseite des stationären Trichters (36) anstößt, und einer zweiten Position bewegt wird, wo die Öffnung auf der Seite des stationären Trichters von der Öffnung auf der Ansaugseite des stationären Trichters (36) getrennt ist; und
der erste Drehungsradius (R1) des ersten Arms (46) und der zweite Drehungsradius (R2) des zweiten Arms (47) so sind, dass die Öffnung auf der Seite des stationären Trichters des beweglichen Trichters (37), wenn der bewegliche Trichter (37) in die erste Position bewegt wird, und die Öffnung auf der Seite des stationären Trichters beweglichen Trichters (37), wenn der bewegliche Trichter (37) in die zweite Position bewegt wird, ausgerichtet sind, wenn von der Lufteinführrichtung aus betrachtet wird.

4. Fahrzeug (1) nach Anspruch 2 oder 3, das außerdem aufweist:
eine erste Drehwelle (44), die auf einer Seite des ersten Arms (46) vorhanden ist, die den ersten Arm (46) trägt; und
eine zweite Drehwelle (45), die auf einer Seite des zweiten Arms (47) vorhanden ist, die den zweiten Arm (47) trägt, wobei
der bewegliche Trichter (37) einen ersten Halterungsabschnitt, der die andere Seite des ersten Arms (46) trägt, und einen zweiten Halterungsabschnitt umfasst, der die andere Seite des zweiten Arms (47) trägt,
ein Abstand zwischen der ersten Drehwelle (44) des ersten Arms (46) und dem ersten Halterungsabschnitt des beweglichen Trichters (37) größer ist als ein Abstand zwischen der zweiten Drehwelle (45) des zweiten Arms (47) und dem zweiten Halterungsabschnitt des beweglichen Trichters (37).

5. Fahrzeug (1) nach Anspruch 4, bei dem
der bewegliche Trichter (37) zwischen einer ersten Position, wo eine Öffnung auf der Seite des stationären Trichters des beweglichen Trichters (37) an eine Öffnung auf einer Ansaugseite des stationären Trichters (36) anstößt, und einer zweiten Position bewegt wird, wo die Öffnung auf der Seite des stationären Trichters von der Öffnung auf der Ansaugseite des stationären Trichters (36) getrennt ist; und,
wenn der bewegliche Trichter (37) in der ersten Position positioniert ist, die erste Drehwelle (44) des ersten Arms (46) über einer Stirnfläche der Öffnung auf der Ansaugseite des beweglichen Trichters (37) angeordnet ist.

6. Fahrzeug (1) nach Anspruch 4 oder 5, bei dem sich der erste Arm (46) von der ersten Drehwelle (44) in Richtung des stationären Trichters (36) erstreckt.

7. Fahrzeug (1) nach Anspruch 4, 5 oder 6, bei dem der erste Halterungsabschnitt des beweglichen Trichters (37), der den ersten Arm (46) trägt, auf der Seite des stationären Trichters mit Bezugnahme auf eine Stirnfläche der Öffnung auf der Ansaugseite des beweglichen Trichters (37) angeordnet ist.

8. Fahrzeug (1) nach einem der Ansprüche 4 bis 7, bei dem die erste Drehwelle (44) des ersten Arms (46) in einer Position angeordnet ist, die von einer Mitte des beweglichen Trichters (37) weiter weg ist als die Drehwelle des zweiten Arms (47).

9. Fahrzeug (1) nach einem der Ansprüche 2 bis 8, das außerdem aufweist:
eine Luftkammer (24), die mit dem stationären Trichter (36) verbunden ist; und
ein Befestigungselement (62), das die Luftkammer (24) am stationären Trichter (36) befestigt, wobei
die Armanordnung angeordnet ist, um einen Schnitt des Befestigungselementes (62) des stationären Trichters (36) zu vermeiden.

10. Fahrzeug (1) nach einem der Ansprüche 2 bis 9, bei dem
der bewegliche Trichter (37) einen Ansaugabschnitt umfasst, der bei Benutzung von mindestens einem Abschnitt der Öffnung der Ansaugseite des beweglichen Trichters (37) gebildet wird, der sich nach außen in der radialen Richtung des beweglichen Trichters (37) vergrößert und
die Armanordnung einen sich überdeckenden Abschnitt umfasst, der mindestens einen Abschnitt aufweist, der sich mit dem Ansaugabschnitt des beweglichen Trichters (37) überdeckt.

11. Fahrzeug (1) nach einem der Ansprüche 2 bis 10, bei dem
der stationäre Trichter (36) eine Halterungsstrebe umfasst, die eine erste Drehwelle (44) des ersten Arms (46) und eine zweite Drehwelle (45) des zweiten Arms (47) trägt, und
der zweite Arm (47) ein erstes Anschlagelement (47c) umfasst, das, wenn die Öffnung auf der Seite des stationären Trichters des beweglichen Trichters (37) in eine zweite Richtung gedreht wird, um sich von der Öffnung auf der Ansaugseite des stationären Trichters (36) zu trennen, gegen die Halterungsstrebe des stationären Trichters (36) stößt, um zu verhindern, dass sich der zweite Arm (47) mehr als erforderlich in der zweiten Richtung dreht.

12. Fahrzeug (1) nach Anspruch 11, bei dem
der zweite Arm (47) ein zweites Anschlagelement (47d) umfasst, das, wenn die Öffnung auf der Seite des stationären Trichters des beweglichen Trichters (37) in eine erste Richtung gedreht wird, um an die Öffnung auf der Ansaugseite des stationären Trichters (36) anzustoßen, gegen die Halterungsstrebe des stationären Trichters (36) stößt, um zu verhindern, dass sich der zweite Arm (47) mehr als erforderlich in der ersten Richtung dreht.

13. Fahrzeug (1) nach Anspruch 12, bei dem die Halterungsstrebe des stationären Trichters (36) einen Aufnahmeabschnitt mit einer Nutform umfasst, an den der erste Anschlagabschnitt des zweiten Arms (47) anstößt.

14. Fahrzeug (1) nach Anspruch 12 oder 13, bei dem der erste Anschlagabschnitt (47c) und der zweite Anschlagabschnitt (47d) des zweiten Arms (47) in Richtung der entgegengesetzten Seite aus einer Seite vorstehen, wo der erste Arm (46) angeordnet ist.

15. Fahrzeug (1) nach Anspruch 12, 13 oder 14, das außerdem aufweist:
eine Antriebsquelle (50), die auf einer Seite des beweglichen Trichters (37) angeordnet und ausgebildet ist, um den beweglichen Trichter (37) anzutreiben;
eine zweite Welle, die auf der anderen Seite des zweiten Arms (47) vorhanden ist, die sich zusammen mit dem zweiten Arm (47) dreht;
ein Stabelement (53), das zwischen der Antriebsquelle (50) und der zweiten Drehwelle (45) eine Verbindung herstellt, das den zweiten Arm (47) durch Übertragen einer Antriebskraft der Antriebsquelle (50) auf die zweite Drehwelle (45) dreht;
ein Bewegungselement (52), das das Stabelement (53) trägt und bewegt; und
ein Treibelement (55), das das Bewegungselement (52) treibt, wobei
eine Treibkraft des Treibelementes (55) auf das Stabelement (53) mittels des Bewegungselementes (52) übertragen wird, um die zweite Drehwelle (45) zu drehen,
wobei sich der zweite Arm (47) zusammen mit dem Drehen der zweiten Drehwelle (45) dreht, und,
wenn der erste Anschlagabschnitt (47c) an die Halterungsstrebe (36e) infolge des Drehens des zweiten Arms (47) in der zweiten Richtung anstößt, die Treibkraft des Treibelementes (55) auf den zweiten Arm (47) mittels des Bewegungselementes (52) übertragen wird, so dass sich der zweite Arm (47) in der zweiten Richtung dreht, und,
wenn der zweite Anschlagabschnitt (47d) an die Halterungsstrebe infolge des Drehens des zweiten Arms (47) in der ersten Richtung anstößt, die Treibkraft des Treibelementes (55) auf den zweiten Arm (47) mittels des Bewegungselementes (52) übertragen wird, so dass sich der zweite Arm (47) in der ersten Richtung dreht.

## Revendications

1. Moteur (14), comprenant:
un orifice d'admission (17a) ;
un entonnoir fixe (36), introduisant l'air dans l'orifice d'admission (17a) du moteur (14) ;
un entonnoir mobile (37), pouvant se déplacer vers une ouverture d'admission de l'entonnoir fixe (36), et introduisant, ensemble avec l'entonnoir fixe (36), de l'air dans l'orifice d'admission (17a) du moteur (14) ; et
un assemblage de bras, supportant l'entonnoir mobile (37), de sorte que l'entonnoir mobile (37) peut être déplacé dans une direction d'introduction de l'air dans l'entonnoir fixe (36), **caractérisé en ce que**
l'assemblage de bras englobe un premier bras (46), tournant à un premier rayon de rotation (R1), un deuxième bras (47), tournant à un deuxième rayon de rotation (R2) différent du premier rayon de rotation (R1).

2. Véhicule (1), comprenant un moteur (14) selon la revendication 1.

3. Véhicule (2) selon la revendication 2, dans lequel :
l'entonnoir mobile (37) est déplacée entre une première positon, dans laquelle une ouverture sur le côté de l'entonnoir fixe de l'entonnoir mobile (37) bute contre une ouverture sur un côté d'admission de l'entonnoir fixe (36), et une deuxième positon, dans laquelle l'ouverture sur le côté de l'entonnoir fixe est séparée de l'ouverture sur le côté d'admission de l'entonnoir fixe (36) ; et
le premier rayon de rotation (R1) du premier bras (46) et le deuxième rayon de rotation (R2) du deuxième bras (47) sont tels que l'ouverture sur le côté de l'entonnoir fixe de l'entonnoir mobile (37), lorsque l'entonnoir mobile (37) est déplacé vers la première position, l'ouverture sur le côté de l'entonnoir fixe de l'entonnoir mobile (37) étant déplacée vers la deuxième position, sont alignées, vues dans la direction d'introduction de l'air.

4. Véhicule (1) selon les revendications 2 ou 3, comprenant en outre :
un premier arbre de rotation (44), agencé sur un côté du premier bras (46), supportant le premier bras (46) ; et
un deuxième arbre de rotation (45), agencé sur un côté du deuxième bras (47), supportant le deuxième bras (47), dans lequel
l'entonnoir mobile (37) englobe une première partie de support, supportant l'autre côté du premier bras (46), et une deuxième partie de support, supportant l'autre côté du deuxième bras (47) ;
une distance entre le premier arbre de rotation (44) du premier bras (46) et la première partie de support de l'entonnoir mobile (37) est plus grande qu'une distance entre le deuxième arbre de rotation (45) du deuxième bras (47) et la deuxième partie de support de l'entonnoir mobile (37).

5. Véhicule (1) selon la revendication 4, dans lequel
l'entonnoir mobile (37) est déplacé entre une première position, dans laquelle une ouverture sur le côté de l'entonnoir fixe de l'entonnoir mobile (37) bute contre une ouverture sur un côté d'admission de l'entonnoir fixe (36), et une deuxième position, dans laquelle l'ouverture sur le côté de l'entonnoir fixe est séparée de l'ouverture sur le côté d'admission de l'entonnoir fixe (36) ; et
lorsque l'entonnoir mobile (37) est positionné au niveau de la première position, le premier arbre de rotation (44) du premier bras (46) est agencé au-dessus d'une surface d'extrémité de l'ouverture au niveau du côté d'admission de l'entonnoir mobile (37).

6. Véhicule (1) selon les revendications 4 ou 5, dans lequel le premier bras (46) s'étend du premier arbre de rotation (44) vers l'entonnoir fixe (36).

7. Véhicule (1) selon les revendications 4, 5 ou 6, dans lequel la première partie de support de l'entonnoir mobile (37), supportant le premier bras (46), est agencée sur le côté de l'entonnoir fixe par rapport à une surface d'extrémité de l'ouverture au niveau du côté d'admission de l'entonnoir mobile (37).

8. Véhicule (1) selon l'une quelconque des revendications 4 à 7, dans lequel le premier arbre de rotation (44) du premier bras (46) est agencé au niveau d'une position éloignée davantage d'un centre de l'entonnoir mobile (37) que l'arbre de rotation du deuxième bras (47).

9. Véhicule (1) selon l'une quelconque des revendications 2 à 8, comprenant en outre :
une chambre à air (24), connectée à l'entonnoir fixe (36) ; et
un élément de fixation (62), fixant la chambre à air (24) sur l'entonnoir fixe (36), dans lequel
l'assemblage de bras est agencé de sorte à éviter une section de l'élément de fixation (62) de l'entonnoir fixe (36).

10. Véhicule (1) selon l'une quelconque des revendications 2 à 9, dans lequel :
l'entonnoir mobile (37) englobe une partie d'admission, formée en utilisant au moins une partie de l'ouverture du côté d'admission de l'entonnoir mobile (37), élargie vers l'extérieur dans la direction radiale de l'entonnoir mobile (37) ; et
l'assemblage de bras englobe une partie à chevauchement, comportant au moins une partie chevauchant la partie d'admission de l'entonnoir mobile (37).

11. Véhicule (1) selon les revendications 2 à 10, dans lequel :
l'entonnoir fixe (36) englobe une entretoise de support supportant un premier arbre de rotation (44) du premier bras (46) et un deuxième arbre de rotation (45) du deuxième bras (47) ; et
le deuxième bras (47) englobe un premier élément de butée (47c), butant, lorsque l'ouverture au niveau du côté de l'entonnoir fixe de l'entonnoir mobile (37) est tournée dans une deuxième direction en vue d'une séparation de l'ouverture au niveau du côté d'admission de l'entonnoir fixe (36), contre l'entretoise de support de l'entonnoir fixe (36) pour empêcher une rotation superflue du deuxième bras (47) dans la deuxième direction.

12. Véhicule (1) selon la revendication 11, dans lequel
le deuxième bras (47) englobe un deuxième élément de butée (47d), butant, lorsque l'ouverture au niveau du côté de l'entonnoir fixe de l'entonnoir mobile (37) est tournée dans une première direction, en vue d'une butée contre l'ouverture au niveau du côté d'admission de l'entonnoir fixe (36), contre l'entretoise de support de l'entonnoir fixe (36) pour empêcher une rotation superflue du deuxième bras (47) dans la première direction.

13. Véhicule (1) selon la revendication 12, dans lequel l'entretoise de support de l'entonnoir fixe (36) englobe une partie de réception, ayant la forme d'une rainure, contre laquelle bute la première partie de butée du deuxième bras (47).

14. Véhicule (1) selon les revendications 12 ou 13, dans lequel la première partie de butée (47c) et la deuxième partie de butée (47d) du deuxième bras débordent vers le côté opposé à un côté sur lequel est agencé le premier bras (46).

15. Véhicule (1) selon les revendications 12, 13 ou 14, comprenant en outre :
une source d'entraînement (50), agencée vers un côté de l'entonnoir mobile (37) et adapté pour entraîner l'entonnoir mobile (37) ;
un deuxième arbre, agencé sur l'autre côté du deuxième bras (47), tournant ensemble avec le deuxième bras (47) ;
un élément de tige (53), connecté entre la source d'entraînement (50) et le deuxième arbre de rotation (45), faisant tourner le deuxième bras (47) en transmettant la force d'entraînement de la source d'entraînement (50) vers le deuxième arbre de rotation (45) ;
un élément mobile (52), supportant et déplaçant l'élément de tige (53) ; et
un élément poussoir (55), poussant l'élément mobile (52) ; dans lequel la force de poussée de l'élément poussoir (55) est transmise vers l'élément de tige (53) par l'intermédiaire de l'élément mobile (52), pour faire tourner le deuxième arbre de rotation (45) ;
le deuxième bras (47) tournant lors de la rotation du deuxième arbre de rotation (45) ; et
lorsque la première partie de butée (47c) bute contre l'entretoise de support (36e) par suite de la rotation du deuxième bras (47) dans la deuxième direction, la force de poussée de l'élément poussoir (55) est transmise vers le deuxième bras (47) par l'intermédiaire de l'élément mobile (52), de sorte que le deuxième bras (47) tourne dans la deuxième direction ; et
lorsque la deuxième partie de butée (47d) bute contre l'entretoise de support par suite de la rotation du deuxième bras (47) dans la première direction, la force de poussée de l'élément poussoir (55) est transmise vers le deuxième bras (47) par l'intermédiaire de l'élément mobile (52), de sorte que le deuxième bras (47) tourne dans la première direction.
